# EUROPÄISCHE PATENTANMELDUNG

(11) **EP 4 527 190 A1**
(43) Veröffentlichungstag der Anmeldung: **26.03.2025**
(21) Anmeldenummer: 23199137.3
(22) Anmeldetag: 22.09.2023
(51) Int. Cl.: A01G 25/09

(54) **SELBSTFAHRENDE VORRICHTUNG ZUM BEREGNEN VON FLÄCHEN**

(71) Anmelder: seed2soil GmbH & Co. KG, 26215 Wiefelstede (DE)
(72) Erfinder: Lange, Justus, 29223 Celle (DE); Hamann, Malte, 26188 Edewecht (DE); Lücking, Florian, 26689 Godensholt (DE); Pokriefke, Michael, 27798 Hude (DE)
(74) Vertreter: Weeg, Thomas

(57) **Zusammenfassung**

Die vorliegende Erfindung bezieht sich auf eine selbstfahrende Vorrichtung (2) zum Beregnen von Flächen.

Es wird vorgeschlagen, die Vorrichtung mit einer rotierend angetriebenen Ausbringleitung zu versehen, die von einem Traggestänge gehalten ist, das zwischen einer Gebrauchsstellung und einer Transportstellung hin und her verlagerbar ist.

## Beschreibung

Die vorliegende Erfindung bezieht sich auf eine selbstfahrende Vorrichtung zum Beregnen von Flächen nach dem Oberbegriff des Anspruchs 1.

Aus der Schrift DE 2 209 702 A1 ist ein gattungsgemäßes selbstwanderndes Beregnungsgerät bekannt. Der auf die Schlauchtrommel aufgewickelte Versorgungsschlauch wird mit seinem ersten Ende mit einer Wasserversorgung verbunden. Danach wird die Vorrichtung über die zu beregnende Fläche bewegt, wobei dabei sukzessive der Versorgungschlauch von der Schlauchtrommel abgezogen und auf dem Boden abgelegt wird. Ist das Ende der zu beregnenden Fläche erreicht oder der Versorgungschlauch vollständig von der Schlauchtrommel abgewickelt worden, wird das Beregnungsgerät gestoppt. Danach wird der Wasserfluss eingeschaltet und es bewegt sich die Vorrichtung Wasser verteilend am Versorgungsschlauch entlang zurück zur Ausgangsposition. Gattungsgemäße Beregnungsgeräte verfügen zumeist über zwei Regner, einen ersten zum Antrieb der Schlauchtrommel und einen zweiten zum Verteilen der Hauptmenge des Wassers. Der erste Regner verfügt über eine starre selbsttragende Ausbringleitung, an deren Enden sich jeweils eine Düse befindet. Die Ausbringleitung rotiert während der Rückfahrt um eine Hochachse in einer Ebene oberhalb der Schlauchtrommel. Über die endseitig an der Ausbringleitung angeordneten Düsen tritt über den Versorgungsschlauch in das Traggestänge gepumptes Wasser aus. Das durch die Düsen austretende Wasser treibt die Ausbringleitung nach dem Rückstoßprinzip in Rotationsrichtung an. Der erste Regner ist über die Rotationsachse und über ein Getriebe mit der Drehachse der Schlauchtrommel verbunden und treibt diese bei der Rückfahrt an, um den Schlauch aufzurollen. Damit ein ausreichender Antriebsimpuls erzeugt wird, sind die Düsen in eine Richtung ausgerichtet, die der Rotationsrichtung der Ausbringleitung entgegengerichtet ist. Die Länge der Ausbringleitung ist begrenzt, weil die Antriebsleistung der nach dem Rückstoßprinzip arbeitenden Düsen irgendwann nicht mehr ausreicht, um das zur größeren Länge proportional angestiegene Gewicht zu bewegen. Bei einer zunehmenden Länge der Ausbringleitung hängt auch das Material des verwendeten selbsttragenden Rohres an den äußeren Enden so weit herunter, dass die Rohrenden auf dem Boden schleifen und dadurch eine Rotationsbewegung blockieren. Der erste Regner ist nicht für den Einsatz mit großen Arbeitsbreiten geeignet, da die im Wasser gespeicherte Energie für den Trommelantrieb verwendet wird, damit ist die Flugweite des austretenden Wassers begrenzt. Beim zweiten Regner handelt es sich um einen Weitwurfregner zur Erreichung einer großen Arbeitsbreite. Zum Erreichen der großen Arbeitsbreite wird dieser mit Wasserdrücken von mehr als 5 bar betrieben.

Aus der Schrift EP 0 604 682 A1 ist eine Vorrichtung zum Beregnen von landwirtschaftlichen Flächen bekannt, die ein Traggestänge aufweist, das in einer Pendelbewegung um etwa 60° um die Hochachse pendelnd beweglich ist. Das Traggestänge ragt hoch nach oben auf. Die Wasserversorgung erfolgt nicht über einen Versorgungschlauch, der auf einer auf der selbstfahrenden Vorrichtung angeordneten Schlauchtrommel aufgewickelt wird. Da das Traggestänge in der Gebrauchsstellung breiter ist als das Maß einer für öffentliche Straßen zulässigen Breite, ist das Traggestänge in mehrere Gestängeabschnitte unterteilt, die über Gelenke miteinander verbunden sind. Die Gestängeabschnitte können aus einer Gebrauchsstellung über einen Seilzug in horizontaler Richtung auf ein für die Benutzung von öffentlichen Straßen zulässiges Breitenmaß in eine Transportstellung zusammengeklappt werden. Das starre Traggestänge erstreckt sich in seiner Gebrauchsstellung zumindest annähernd in einer Richtung quer zur Fahrtrichtung. Eine Drehbewegung des Traggestänges in einem Vollkreis ist nicht vorgesehen.

Aus der Schrift DE 42 09 332 A1 ist eine Spritze zur Ausbringung von Pflanzenschutzmitteln bekannt. Um eine Fläche zu behandeln, ist auf einem Fahrzeug ein Auslegersystem angeordnet, an dem sich eine Anzahl von Ausbringdüsen befindet. Das Auslegersystem ist um bis zu 180° drehbar, um die Ausbringbreite verringern zu können, wenn ein Hindernis passiert werden soll, wenn schmalere Bahnen bearbeitet werden oder wenn am Feldende gewendet wird.

Es ist die Aufgabe der vorliegenden Erfindung, die Ausbringleistung einer selbstfahrenden Vorrichtung zu steigern bei gleichzeitiger Vermeidung von Bodenerosion und oberflächlichem Wasserabfluss durch den Beregnungsvorgang.

Die Aufgabe wird durch die kennzeichnenden Merkmale des Anspruchs 1 gelöst.

Wenn die Ausbringleitung faltbar ausgestaltet an einem auf der selbstfahrenden Vorrichtung montierten, drehbeweglich mit der selbstfahrenden Vorrichtung verbundenen faltbar ausgestalteten Traggestänge befestigt ist, muss die Ausbringleitung selbst nicht mehr selbsttragend ausgebildet sein. Das Traggestänge macht es möglich, eine erheblich längere Ausbringleitung auf der selbstfahrenden Vorrichtung anzuordnen, weil über das Traggestänge über die Arbeitsbreite der Vorrichtung hinweg erheblich höhere Traglasten aufgenommen werden können. Über die erheblich längere Ausbringleitung steigt die Ausbringleistung der Vorrichtung in einem gegebenen Zeitintervall erheblich an, weil bei einem Arbeitsgang innerhalb des gleichen Zeitintervalls eine erheblich höhere Arbeitsbreite abgedeckt wird als bei einer kürzeren Ausbringleitung ohne ein Traggestänge.

Wenn die Ausbringleitung und das Traggestänge beide faltbar ausgestaltet sind, können diese leicht zwischen einer Gebrauchsstellung und einer Transportstellung hin und her verlagert werden. Für die Beregnungsarbeit werden die Ausbringleitung und das Traggestänge auseinandergefaltet, um eine möglichst große Arbeitsbreite darzustellen. Für den Straßentransport werden die Ausbringleitung und das Traggestänge wieder auf eine geringere Breite zusammengefaltet, um eine möglichst geringe Transportbreite zu schaffen.

Die Ausbringleitung ist über das drehbeweglich mit der selbstfahrenden Vorrichtung verbundene Traggestänge drehbar auf der selbstfahrenden Vorrichtung angeordnet. Mit der Drehung des Traggestänges wird gleichzeitig also auch die Ausbringleitung mit gedreht.

Wenn hier von einem Traggestänge die Rede ist, so kann dieses nach der Art eines Fachwerkrahmens mit geeignet angeordneten und starr miteinander verbundenen Trägerprofilen ausgebildet sein. Davon abweichend ist es aber auch möglich, Lasten zumindest teilweise über Drahtseile, Kunststoffseile, Rohre, Umlenkrollen, Tragösen und vergleichbare Konstruktionselemente abzufangen, die bei einer gleichen Traglast leichter sein können als eine Fachwerkkonstruktion aus starr miteinander verbundenen Profilen, eine größere Elastizität bei Stoßbelastungen aufweisen und die in einer Belastungsrichtung wirkend in die Konstruktion des Traggestänges integriert sind.

Wenn das Traggestänge in der Gebrauchsstellung in einer Ebene oberhalb der Schlauchtrommel gehalten ist, kann das Traggestänge zusammen mit der Ausbringleitung frei um 360° rotieren. Die volle Rotation der Ausbringleitung, insbesondere die ununterbrochene Rotation in eine Rotationsrichtung, ermöglicht eine gleichmäßige Benetzung der zu bearbeitenden Fläche mit Wasser. Durch die Kombination der Rotationsbewegung der Ausbringleitung mit der Vorfahrtsbewegung der selbstfahrenden Vorrichtung ergibt sich für jede an der Ausbringleitung angebrachte Düse in einer Abwicklung ihrer Bewegung über die zu bearbeitende Fläche ein spiralartiger Verlauf, deren konkrete Ausgestaltung von der Rotationsgeschwindigkeit der Ausbringleitung und der Vorfahrtsgeschwindigkeit der selbstfahrenden Vorrichtung abhängig ist. Über die Mehrzahl der an der Ausbringleitung angeordneten Düsen ergibt sich aber unter Einbeziehung der Bewegungskomponente in Fahrtrichtung der selbstfahrenden Vorrichtung jedenfalls eine mehrfache Überschneidung der spiralartigen Verläufe der Düsenbewegungen über die Fläche, selbst wenn die Düsen in einem gewissen Abstand zueinander angeordnet sind. Dadurch werden auch Flächenanteile von einer zweiten, dritten oder n-ten Düse mit Wasser benetzt, die bei den spiralartigen Bewegungen einer ersten Düse über die zu bearbeiteten Fläche nicht mit Wasser benetzt worden sind. Daraus ergibt sich die gute und gleichmäßige Benetzung der bearbeiteten Fläche mit Wasser.

Bei dieser Ausgestaltung ist es möglich, in den Bereichen der Ausbringleitung, die bei einer Rotationsbewegung die selbstfahrende Vorrichtung überstreichen, keine Düsen anzubringen, ohne dadurch die gleichmäßige Benetzung der zu bearbeitenden Fläche mit Wasser zu beeinträchtigen. Das Wasser, das auf die selbstfahrende Vorrichtung gesprüht würde, würde sich nicht gleichmäßig auf der zu bearbeitenden Fläche verteilen, sondern seitlich an der Karosserie selbstfahrende Vorrichtung ablaufen und dadurch eine in Fahrtrichtung verlaufende Tropfspur bilden. Durch die im Wasser enthaltenen Mineralien und Schwebstoffe würde die ständig besprühte selbstfahrende Vorrichtung mit der Zeit auch zunehmend optisch unansehnlich werden. Diese Nachteile werden bei dieser Ausgestaltung vermieden.

Selbst wenn die Schlauchtrommel so in die selbstfahrende Maschine eingebaut ist, dass sie an ihrem höchsten Punkt eine Höhe erreicht, die der maximalen Bauhöhe für im Straßenverkehr zugelassene Fahrzeuge entspricht, kann das Traggestänge in der Gebrauchsstellung diese Bauhöhe überschreiten, ohne dass die selbstfahrende Vorrichtung deshalb nicht mehr auf einem Feld betrieben werden dürfte. Außerhalb des Straßenverkehrs können die dort geltenden Bestimmungen, insbesondere die im Straßenverkehr geltenden Höhenbeschränkungen für Arbeitsmaschinen, unberücksichtigt bleiben. Bei der vorgeschlagenen Ausgestaltung kann das Traggestänge in seiner Gebrauchsstellung also den höchsten Punkt der Schlauchtrommel überragen, auch wenn der höchste Punkt der Schlauchtrommel der maximal zulässigen Bauhöhe von Arbeitsmaschinen im Straßenverkehr entspricht.

Schließlich ist das Traggestänge mit einem Antrieb antriebsverbunden, mit dem das Traggestänge rotierend antreibbar ist. Durch den eigenen motorischen Antrieb des Traggestänges ist es möglich, die Ausbringleitung auch dann in eine Rotation zu versetzen, wenn sich die Ausbringleitung zusammen mit dem Traggestänge über eine große Arbeitsbreite hinweg erstreckt. Die Düsen müssen nicht mehr in Rotationsrichtung ausgerichtet sein, sondern können das Wasser direkt in Richtung des Bodens sprühen. Dadurch verringern sich die Verdunstungsverluste, und die Effizienz der selbstfahrenden Vorrichtung steigt. Das Ziel, den Vorratsschlauch beim Abrollen und Einrollen gespannt zu halten, kann auf andere Weise als durch das Rückstoßprinzip des aus den Düsen austretenden Wassers eingehalten werden.

Wenn der Rückstoß des aus den Düsen austretenden Wassers nicht mehr dazu benötigt wird, die Rotationsbewegung der Ausbringleitung anzutreiben, ist es möglich, das Wasser mit einem geringeren Druck an den Düsen austreten zu lassen. Bei einem geringeren Druck wird das austretende Wasser weniger vernebelt, wodurch der bei der Ausbringung des Wassers verdunstende Anteil kleiner wird und der Energiebedarf zur Wasserbereitstellung sinkt. Die Ausbringung des Wassers wird dadurch effizienter. Die technischen Anforderungen an die wasserführenden Bauteile können der geringeren Belastung entsprechend reduziert werden.

Der motorische Antrieb kann so ausgestaltet sein, dass er wahlweise bidirektional betrieben werden kann. Ein zeitweise schnellerer Vorwärts- oder eine zeitweise oder dauerhafte Umschaltung auf einen Rückwärtslauf im Stand oder während der Fahrt der selbstfahrenden Vorrichtung kann dazu genutzt werden, eine Kollision des Traggestänges mit einem Hindernis zu verhindern oder die vollständige Bewässerung des aktuell bearbeiteten Feldes auch im Bereich des Vorgewendes oder in Bereichen, in denen die zu verbessernde Fläche schmaler ist als die Arbeitsbreite der Ausbringleitung, zu ermöglichen.

Über den eigenen motorischen Antrieb ist es möglich, die Rotationsgeschwindigkeit der Ausbringleitung unabhängig vom Druck und der Strömungsgeschwindigkeit des auszubringenden Wassers auf einen ausgewählten oder vorgegebenen Wert einzustellen. Die Rotationsgeschwindigkeit kann über den eigenen motorischen Antrieb beispielsweise an unterschiedliche Sprüheigenschaften von unterschiedlichen Düsen angepasst werden, je nachdem, welche Düsen an der Ausbringleitung montiert sind. Über eine gemeinsame elektronische Steuerung ist es auch möglich, die Rotationsgeschwindigkeit automatisch an einen aktuellen oder vorgewählten Wert für die Vorfahrtgeschwindigkeit der selbstfahrenden Vorrichtung anzupassen, um auf der zu bearbeitenden Fläche ein bestimmtes Sprühbild zu erzielen.

Es ist auch möglich, vor dem Beginn eines Arbeitszyklusses nach der Art des Precision Farmings eine Bewässerungskarte für die zu bewässernde Fläche zu erstellen, um Flächenanteile mit einem unterschiedlichen Bewässerungsbedarf mit unterschiedlichen Wassermengen zu bewässern. Die Bewässerung der Flächenanteile kann durch eine entsprechende flächenspezifisch unterschiedliche Steuerung der Rotationsgeschwindigkeit der Ausbringleitung und/oder der Fahrgeschwindigkeit der selbstfahrenden Vorrichtung sowie einer eventuellen zusätzlichen Druckregelung des auszubringenden Wassers und/oder einer zusätzlichen elektronisch gesteuerten Zu- oder Abschaltung von einzelnen oder mehreren Düsen gesteuert werden. So kann die Bewässerungsmenge beispielsweise in Senken reduziert werden, da diese auch bei längerer Trockenheit häufig noch ausreichend feucht sind. In Feldabschnitten mit sandigen Böden kann die Bewässerungsmenge erhöht werden, weil dort vorhandene Feuchtigkeit schnell in den Boden versickert.

Mit der erfindungsgemäßen Vorrichtung ist es möglich, trotz eines reduzierten Wasserdrucks mit einer Fahrt eine große Fläche zu beregnen. Der niedrigere Wasserdruck und die dadurch geringere Wurfweite der Düsen wird kompensiert durch eine größere Arbeitsbreite der Ausbringleitung, die wiederum über das Traggestänge ermöglicht wird. Durch die Kombination einer kreisförmigen Rotation der Ausbringleitung mit der Vorfahrt der Vorrichtung ist das Zeitintervall, in dem die zu beregnende Fläche bei einer Überfahrt erstmals und letztmals mit Wasser besprüht wird, länger, so dass die von einer Düse während der Beregnung abgegebene Wassermenge reduziert werden kann, ohne dadurch die effektive Bewässerungsmenge zu reduzieren. Statt eines Weitwurfregners befinden sich an der Ausbringleitung eine Mehrzahl von Düsen, die unter der ständigen Rotation der Ausbringleitung eine zu bewässernde Teilfläche bei einer Überfahrt mehrfach überstreichen. Das hinter der neuartigen Vorrichtung stehende Bewässerungskonzept baut also auf vielen kleinen Wassergaben während eines längeren Überfahrt-Zeitintervalls statt nur auf einer einzigen oder wenigen großen Wassergaben in einem viel kürzeren Zeitintervall auf, um die beschriebenen Vorteile zu erzielen. Das längere Zeitintervall vermeidet auf diese Weise eine sturzbachähnliche Bewässerung, bei der Wasser abfließt und Bodenerosion verursacht. Der nun mögliche reduzierte Wasserdruck verringert den Energieaufwand der Wasserpumpe, und durch die geringere Wasservernebelung an den Düsen sinken die Verdunstungsverluste. Mit dem geringeren Wasserdruck können regenähnlichere Tropfen auf den Boden aufgebracht werden, die den Boden besser benetzen und im Zeitintervall, in dem eine Bodenfläche bei der Überfahrung bewässert wird, besser vom Boden aufgenommen werden.

Wenn in dieser Beschreibung und in den Ansprüchen von einer selbstfahrenden Vorrichtung die Rede ist, so ist damit eine Beregnungsvorrichtung gemeint, die im Betrieb nicht als eine Anbauvorrichtung von einem Traktor getragen wird, sondern über einen eigenen Fahrantrieb verfügt und sich aus eigener Kraft fortbewegen kann. Die Antriebskomponenten können in den Rahmen der Vorrichtung fest eingebaut und mit diesem fest verbunden sein. Es ist allerdings auch möglich, die Antriebskomponenten der Vorrichtung in einer Antriebseinheit zu kombinieren, die als Antriebsmodul mit der übrigen Vorrichtung verbunden ist. Das Antriebsmodul kann auch für andere Anwendungen verfügbar sein, indem es von der Vorrichtung abtrennbar und unabhängig von der Vorrichtung auch mit anderen Arbeitsmodulen betreibbar ausgestaltet ist. Die Vorrichtung kann von einem Fahrer gesteuert sein, der auf der Maschine sitzt, es ist aber auch möglich, die Vorrichtung so auszubilden, dass sie in einem autonomen Betriebsmodus automatisch ohne ständige Kontrolle durch einen Fahrer betrieben werden kann.

Nach einer Ausgestaltung der Erfindung ist das Traggestänge in der Transportstellung zumindest teilweise in eine Ebene unterhalb des obersten Punktes der Schlauchtrommel verlagerbar. Wenn das Traggestänge in der Transportstellung zumindest teilweise in eine Ebene unterhalb des obersten Punkts der Schlauchtrommel verlagerbar ist, ist es möglich, die Schlauchtrommel mit einem Durchmesser auszugestalten, bei dem die im Straßenverkehr zulässigen Grenzen der Bauhöhe im Idealfall maximal ausgeschöpft werden. In der Transportstellung muss also nicht mehr das Traggestänge das am höchsten aufragende Bauteil in der selbstfahrenden Vorrichtung sein, wenn es zumindest teilweise in eine Ebene unterhalb des obersten Punkts der Schlauchtrommel verlagerbar ist. Auf die Ausbringleistung der selbstfahrenden Vorrichtung hat das einen erheblichen Einfluss. Durch diese Ausgestaltung kann die Schlauchtrommel einen größeren Durchmesser aufweisen, als das bisher möglich erschien. Wegen des größeren Durchmessers der Schlauchtrommel kann der Versorgungsschlauch entweder einen größeren Durchmesser aufweisen, wodurch in einem gegebenen Zeitintervall bei einem ebenfalls gegebenen Wasserdruck eine größere Wassermenge durch den Versorgungsschlauch fließen kann, sodass die selbstfahrende Vorrichtung in diesem gegebenen Zeitintervall eine größere Wassermenge auf die zu bearbeitende Fläche ausbringt, oder es kann ein längerer Abschnitt eines gleichen Versorgungsschlauchs auf die größere Schlauchtrommel aufgewickelt werden, wodurch die selbstfahrende Vorrichtung auch auf größeren Feldern einsetzbar ist, ohne dafür mehrfach umgesetzt werden zu müssen.

Die Länge des Versorgungsschlauchs bestimmt, welche Strecke die selbstfahrende Vorrichtung zur Bewässerung einer Fläche maximal zurücklegen kann. Der Versorgungschlauch ist am Start einer Bewässerungsfahrt regelmäßig vollständig auf die drehbar gelagerte Schlauchtrommel aufgewickelt und an einem ersten Ende mit einem Wasserzulauf und an einem zweiten Ende mit der Ausbringleitung verbunden. Über den Versorgungsschlauch wird das auszubringende Wasser also von der Wasserversorgung zur Ausbringleitung transportiert. Wenn sich die selbstfahrende Vorrichtung in Bewegung setzt, um eine Fläche zu bewässern, rollt sich dabei der auf der Schlauchtrommel aufgerollte Teil des Versorgungsschlauchs in einer der zurückgelegten Strecke entsprechenden Länge ab. Die Fahrt der selbstfahrenden Vorrichtung wird gestoppt, wenn diese entweder das Feldende erreicht oder der Versorgungschlauch vollständig von der Schlauchtrommel abgerollt ist. Von diesem Endpunkt aus kann die selbstfahrende Vorrichtung die zu bewässernde Fläche bei der Rückfahrt ein zweites Mal bewässern, oder die selbstfahrende Vorrichtung fährt ohne eine weitere Bewässerung schnellstmöglich zum Startpunkt zurück, um von dort aus eine andere Bahn zu bewässern oder um umgesetzt zu werden. Bei der Rückfahrt wird der ausgerollte Versorgungsschlauch wieder auf die Schlauchtrommel aufgerollt. Über den Versorgungsschlauch ist gewährleistet, dass die Ausbringleitung über die gesamte Fahrstrecke der selbstfahrenden Vorrichtung mit Wasser versorgt ist und dieses auf der zu beregnenden Fläche ausbringen kann.

Nach einer Ausgestaltung der Erfindung ist die Schlauchtrommel um eine quer zur Bewegungsrichtung der Vorrichtung ausgerichtete Drehachse im Rahmen der Vorrichtung drehbar gelagert. Die Bewegungsrichtung der Vorrichtung wird durch das Fahrwerk vorgegeben. Wenn die Drehachse der Schlauchtrommel quer zur Bewegungsrichtung der Vorrichtung ausgerichtet ist, kann der Versorgungsschlauch immer parallel zur Bewegungsrichtung der Vorrichtung auf dem Feldboden abgelegt oder von dort aus in einer tangentialen Richtung zur Schlauchtrommel aufgenommen werden. Auf zusätzliche Umlenkvorrichtungen kann dadurch verzichtet werden.

Nach einer Ausgestaltung der Erfindung ist die Schlauchtrommel mit einem motorischen Antrieb antriebsverbunden. Wenn die Schlauchtrommel einen eigenen motorischen Antrieb hat, ist es möglich, darüber die Spannung des Versorgungsschlauchs beim Ausrollen oder Einrollen zu kontrollieren. Der motorische Antrieb kann so gesteuert sein, dass die ein- oder ausgerollte Länge des Versorgungsschlauchs genau der von der Vorrichtung jeweils zurückgelegten Strecke entspricht. Da sich der Außenumfang des auf der Schlauchtrommel aufgerollten Teils des Versorgungsschlauchs aber während des Betriebs der Vorrichtung ständig ändert, verändert sich auch die Länge eines Abschnitts des Versorgungsschlauchs, der bei einer Umdrehung der Schlauchtrommel auf- oder abgerollt wird. Um die Länge einer von der Vorrichtung zurückgelegten Fahrtstrecke und die Länge eines dabei ein- oder ausgerollten Abschnitts des Versorgungsschlauchs trotzdem gleich groß zu halten, ist es vorteilhaft, die aus der Rotationsbewegung resultierende Spannung des Versorgungsschlauchs mittels einer geeigneten Sensorik zu messen und den Motorantrieb über eine elektronische Auswertung der laufend ermittelten Sensordaten mit einer geeignet programmierten Software so zu steuern, dass vorgegebene Schwellwerte für die Spannung des Versorgungsschlauchs nicht über- und/oder unterschritten werden. Wenn ein vorgewählter unterer Schwellwert für die Spannung des Versorgungsschlauchs nicht unterschritten wird, bedeutet das, dass der Versorgungschlauch immer in einer der Bewegungsrichtung der Vorrichtung entsprechenden geraden Linie auf dem Feldboden abgelegt wird. Dadurch wird das spätere Wiederaufrollen des Versorgungsschlauchs erheblich erleichtert. Über die Beeinflussung der Rotationsgeschwindigkeit der Schlauchtrommel mittels des motorischen Antriebs kann einerseits das Risiko verringert werden, dass der Versorgungsschlauch überlastet werden und reißen könnte. Andererseits wird die geradlinige Ablage des Versorgungsschlauchs unterstützt.

Nach einer Ausgestaltung der Erfindung ist die Ausbringleitung als ein flexibler Schlauch ausgebildet. Der flexible Schlauch vereinfacht das Ein- und Ausklappen der Ausbringleitung. In den Gelenkbereichen des Traggestänges kann der flexible Schlauch in Schlaufen verlegt werden, über die Längenveränderungen der Ausbringleitung beim Ein- und Ausklappen kompensierbar sind. Ein flexibler Schlauch ist in der Regel leichter als ein metallisches Rohr, sodass über die Arbeitsbreite die Traglasten möglichst klein gehalten werden.

Nach einer Ausgestaltung der Erfindung ist das Traggestänge mittels einer Hubvorrichtung mit einem motorischen Antrieb zwischen der Gebrauchsstellung und der Transportstellung höhenverstellbar im Rahmen gehalten. Mit der Hubvorrichtung kann das Traggestänge bei der Inbetriebnahme der selbstfahrenden Vorrichtung auf einem Feld aus einer Höhe, in der das oberste Ende des Traggestänges noch den für eine Straßenfahrt gesetzlich maximal zulässigen Höhenwert einhält, auf eine Höhe angehoben werden, bei dem der im Straßenverkehr geltende maximale Höhenwert mit den zum Traggestänge gehörenden Bauteilen zumindest teilweise überschritten ist.

Auf einem mit der Vorrichtung zu beregnenden Feld kann die selbstfahrende Maschine dann mit einem frei und dauerhaft in eine Rotationsrichtung rotierenden und einem sich in der Gebrauchsstellung befindlichen Traggestänge betrieben werden, dessen Bauteile sich zumindest teilweise in einer Höhe befinden, in der der maximal zulässigen Grenzwert für die Bauhöhe einer im Straßenverkehr bewegten Maschine überschritten ist. Das Traggestänge befindet sich dann in einer Höhe, in der es auch oberhalb des höchsten Punktes der Schlauchtrommel frei rotieren kann. Die Schlauchtrommel kann dabei mit ihren Abmessungen die für die Straßenfahrt geltenden maximal zulässigen Höhenmaße ausnutzen.

Um die selbstfahrende Vorrichtung für eine Straßenfahrt wieder auf eine Höhe zurückzurüsten, in der sich die Bauteile des Traggestänges vollständig unterhalb der straßenverkehrsrechtlich maximal zulässigen Höhe befinden, kann das Traggestänge mit der Hubvorrichtung aus einer Höhe, in der Bauteile des Traggestänges die im Straßenverkehr maximal zulässige Höhe zumindest teilweise überschreiten, auf eine Höhe abgesenkt werden, in der sich das Traggestänge innerhalb der im Straßenverkehr maximal zulässigen Höhenmaße befindet. Über die Hubvorrichtung ist eine einfache Höhenverstellung mit einer linear verlaufenden Verstellbewegung möglich. Die für eine Hubvorrichtung benötigten Komponenten sind vergleichsweise kostengünstig. Die Hubbewegung kann über einen Linearantrieb wie beispielsweise einen hydraulischen oder pneumatischen Stellzylinder, ein Scherengitter, einen Kettenantrieb oder mit vergleichbaren anderen Antriebskomponenten wie elektrischen, hydraulischen oder pneumatischen Motoren mit entsprechenden zugehörigen Getrieben erzeugt werden. Über Endlagenschalter kann sichergestellt sein, dass die entsprechenden Endpositionen auch bei einer Verstellbewegung erreicht werden.

Nach einer Ausgestaltung der Erfindung ist zumindest ein Teil des Traggestänges mittels einer entsprechenden Klappvorrichtung aus der Gebrauchsstellung nach unten in die Transportstellung und aus der Transportstellung nach oben zurück in die Gebrauchsstellung klappbar. Mit der Klappvorrichtung kann das Traggestänge bei der Inbetriebnahme der selbstfahrenden Vorrichtung auf einem Feld aus einer Höhe, in der das oberste Ende des Traggestänges noch den für eine Straßenfahrt gesetzlich maximal zulässigen Höhenwert einhält, auf eine Höhe hochgeklappt werden, bei dem der im Straßenverkehr geltende maximale Höhenwert mit den zum Traggestänge gehörenden Bauteilen zumindest teilweise überschritten ist.

Auf einem mit der Vorrichtung zu beregnenden Feld kann die selbstfahrende Maschine dann mit einem frei und dauerhaft in eine Rotationsrichtung rotierenden und einem sich in der Gebrauchsstellung befindlichen Traggestänge betrieben werden, dessen Bauteile sich zumindest teilweise in einer Höhe befinden, in der der maximal zulässigen Grenzwert für die Bauhöhe einer im Straßenverkehr bewegten Maschine überschritten ist. Das Traggestänge befindet sich dann in einer Höhe, in der es auch oberhalb des höchsten Punktes der Schlauchtrommel frei rotieren kann. Die Schlauchtrommel kann dabei mit ihren Abmessungen die für die Straßenfahrt geltenden maximal zulässigen Höhenmaße ausnutzen.

Um die selbstfahrende Vorrichtung für eine Straßenfahrt wieder auf eine Höhe zurückzurüsten, in der sich die Bauteile des Traggestänges vollständig unterhalb der straßenverkehrsrechtlich maximal zulässigen Höhe befinden, kann das Traggestänge mit der Klappvorrichtung aus einer Höhe, in der Bauteile des Traggestänges die im Straßenverkehr maximal zulässige Höhe zumindest teilweise überschreiten, auf eine Höhe nach unten geklappt werden, in der sich das Traggestänge innerhalb der im Straßenverkehr maximal zulässigen Höhenmaße befindet. Über die Klappvorrichtung ist eine einfache Höhenanpassung mit einer einfachen Klappbewegung möglich. Die mittels der Klappbewegung höhenveränderlichen Bauteile können über einfache Klappscharniere mit anderen Bauteilen des Traggestänges verbunden sein, die nicht mit einer Klappbewegung in ihrer Bauhöhe veränderlich sind. Die für eine Klappvorrichtung benötigten Komponenten sind vergleichsweise kostengünstig. Über Endlagenschalter kann sichergestellt sein, dass die entsprechenden Endpositionen nach einer Klappbewegung erreicht worden sind.

Es wird darauf hingewiesen, dass die Hubvorrichtung zur Verstellung der Höhenlage des Traggestänges mit zumindest einer Klappvorrichtung zum Abklappen von Bauteilen des Traggestänges kombiniert werden kann. Die Hubvorrichtung ist beispielsweise vorteilhaft, um die Höhenlage des Traggestänges insgesamt zu verstellen, weil die Hubvorrichtung motorisch angetrieben wird und damit auch darauf ausgelegt ist, größere Lasten zu bewegen. Die einfacher ausgestaltete Klappvorrichtung kann dazu genutzt werden, leichtere und kleinere Bauteile umzuklappen, was manuell oder auch motorisch, aber mit kleiner und kostengünstiger ausgelegten Verstellkomponenten, ausgeführt werden kann. Die Hubvorrichtung muss dadurch nicht darauf ausgelegt sein, die Höhenlage des Traggestänges über den vollen Höhenunterschied zwischen der Höhe des obersten Punktes des Traggestänges in der Gebrauchsstellung und in der Transportstellung zu verstellen, sondern sie kann auf einen Anteil des Höhenunterschieds beschränkt sein, wenn der übrige Anteil des Höhenunterschieds über die Klapplösung verstellbar ist. Diese Kombination kann kostengünstiger herstellbar sein als eine reine Verstellung mittels einer Hubvorrichtung.

Je nach Ausgestaltung des Traggestänges kann der Höhenunterschied zwischen der Höhe des obersten Punktes des Traggestänges in der Gebrauchsstellung und in der Transportstellung wegen technischer Zwänge aber auch nur mittels einer Kombination einer Hubvorrichtung mit zumindest einer Klappvorrichtung überwunden werden. Das ist beispielsweise der Fall, wenn bei einer maximierten Breite der Schlauchtrommel andere Bauteile der selbstfahrenden Vorrichtung den verfügbaren Bauraum, der für eine vollständige Absenkung des Traggestänges mit der Hubvorrichtung benötigt würde, versperren, wie beispielsweise Reifen oder andere Bauteile, oder das Traggestänge so hoch baut, dass es nur mit einer Hubbewegung der Hubvorrichtung nicht so weit nach unten abgesenkt werden kann, dass das Traggestänge am höchsten Punkt das für die Straßenfahrt maximal zulässige Höhenmaß einhält. Der letzte Fall kann insbesondere dann gegeben sein, wenn das Tragwerk des Traggestänges hoch aufragende Stützpfosten aufweist, die aus statischen Gründen ein gewisses Höhenmaß aufweisen müssen, um die über an ihnen aufgehängte Querstreben auf sie übertragenen anteiligen Lasten aus dem Traggestänge und der Ausbringleitung tragen zu können.

Nach einer Ausgestaltung der Erfindung ist zumindest ein klappbarer Teil des Tragwerks des Traggestänges mittels einer entsprechenden Klappvorrichtung aus seiner Gebrauchsstellung in eine Transportstellung nach unten klappbar. Das Tragwerk ist besonders dazu geeignet, einen Teil davon klappbar auszubilden, weil dessen Bauteile besonders hoch aufragen und die Bauhöhe des Traggestänges beim Umklappen dieser besonders hoch aufragenden Bauteile auf einfache Weise insgesamt signifikant reduziert werden kann. Das gilt insbesondere für Teile der Stützpfosten und der damit verbundenen Querstreben.

Nach einer Ausgestaltung der Erfindung weist das Traggestänge über seine Arbeitsbreite verteilt mehrere Gestängeabschnitte auf, die über Gelenke miteinander verbunden sind, das Traggestänge weist einen mittleren Gestängeabschnitt auf, der sich zumindest annähernd parallel und beabstandet zur Drehachse der Schlauchtrommel erstreckt und dessen Breite der Breite der Schlauchtrommel zumindest annähernd entspricht, und sich in Quererstreckungsrichtung des Traggestänges an die Seiten des mittleren Gestängeabschnitts weitere Gestängeabschnitte anschließen, die in ihrer Transportstellung seitlich an die Schlauchtrommel in einer zur Fahrtrichtung der Vorrichtung parallelen Ausrichtung angelegt sind. Bei dieser mehrgliedrigen Ausgestaltung des Traggestänges verbleibt der mittlere Gestängeabschnitt in der Transportstellung in einer Lage, in der er zumindest annähernd die Baubreite der Schlauchtrommel überdeckt. Der mittlere Gestängeabschnitt kann sich sowohl in der Gebrauchsstellung als auch in der Transportstellung annähernd parallel und beabstandet zur Drehachse der Schlauchtrommel erstrecken, er befindet sich dann nur in einer unterschiedlichen Höhe. Da die Baubreite der Schlauchtrommel in der selbstfahrenden Vorrichtung unveränderlich ist, kann auch der mittlere Gestängeabschnitt eine feste Baubreite aufweisen. Damit die Breite des Traggestänges, das sich in der Gebrauchsstellung zumindest annähernd über die gesamte Arbeitsbreite der Vorrichtung erstreckt, in der Transportstellung auf eine Breite reduziert werden kann, bei der die gesetzlichen maximalen Maße für die Straßenfahrt eingehalten sind, werden die sich in Quererstreckungsrichtung des Traggestänges an die Seiten des mittleren Gestängeabschnitts anschließenden weitere Gestängeabschnitte in ihrer Transportstellung seitlich an die Schlauchtrommel in einer zur Fahrtrichtung der Vorrichtung parallelen Ausrichtung angelegt. Um dies zu ermöglichen, können die weiteren Gestängeabschnitte mit dem mittleren Gestängeabschnitt jeweils über Gelenke verbunden sein. In der seitlich an die Schlauchtrommel angelegten Schwenkstellung ist die Breite des Traggestänges auf ein minimales Maß reduziert. Dabei kann sich die Höhenlage, in der das Traggestänge in der Transportstellung gehalten ist, von der Höhenlage unterscheiden, in der sich das Traggestänge in der Gebrauchsstellung befindet.

Nach einer Ausgestaltung der Erfindung schließen sich in Quererstreckungsrichtung des Traggestänges an jede Seite des mittleren Gestängeabschnitts mehrere weitere Gestängeabschnitte an, die miteinander verkettet und an einer Verkettungsstelle gelenkig miteinander verbunden sind, wobei die miteinander verketteten Gestängeabschnitte in ihrer Transportstellung seitlich an die Schlauchtrommel angelegt und über die Gelenke Z-förmig aufgefaltet an der Schlauchtrommel gehalten sind. Bei größeren Arbeitsbreiten der Vorrichtung ist es vorteilhaft, die sich in Quererstreckungsrichtung des Traggestänges an die Seiten des mittleren Gestängeabschnitts anschließenden weitere Gestängeabschnitte jeweils in mehrere Gestängeabschnitte zu unterteilen, die dann miteinander verkettet und über Gelenke miteinander verbunden sind. Um die Transportbreite solcher mehrgliedrigen Gestängeabschnitte zu verringern, wird vorgeschlagen, diese in ihrer Transportstellung Z-förmig aufgefaltet seitlich an die Schlauchtrommel anzulegen. Auf diese Weise können auch Traggestänge in Vorrichtungen mit einer großen Arbeitsbreite auf Breitenmaße zusammengefaltet werden, mit denen die gesetzlichen Vorgaben für die Straßenfahrt einer Vorrichtung eingehalten werden.

Nach einer Ausgestaltung der Erfindung ist der mittlere Gestängeabschnitt über eine motorisch angetriebene Hubvorrichtung höhenverstellbar ausgebildet und die sich in Quererstreckungsrichtung des Traggestänges an jede Seite des mittleren Gestängeabschnitts anschließenden weiteren Gestängeabschnitte sind über den mittleren Gestängeabschnitt höhenverstellbar ausgebildet. Bei dieser Ausgestaltung der Erfindung genügt es, die Hubvorrichtung nur mit dem mittleren Gestängeabschnitt zu verbinden, um die Höhenlage des Traggestänge insgesamt verstellen zu können. Die Vorrichtung bleibt dadurch insgesamt kompakt. Die vergleichsweise schwere Vorrichtung ist nahe des Schwerpunkts der Vorrichtung insgesamt angeordnet, woraus sich eine gute Balance und Manövrierbarkeit der Maschine ergibt. Auf aufwendige Verstrebungen und Verkettungen der Hubvorrichtung mit den sich in Quererstreckungsrichtung des Traggestänges an jede Seite des mittleren Gestängeabschnitts anschließenden weiteren Gestängeabschnitten kann verzichtet werden. Dadurch verringert sich die Komplexität der Höhenverstellung, wodurch die Vorrichtung insgesamt kostengünstiger herstellbar und mit einer hohen Zuverlässigkeit betreibbar ist.

Nach einer Ausgestaltung der Erfindung sind an der Vorrichtung Ablagekonsolen ausgebildet, an denen das Traggestänge in seiner Transportstellung rahmenseitig abgestützt gehalten ist, und die in der Transportstellung von den Ablagekonsolen gehaltenen Teile des Traggestänges sind mit der Hubvorrichtung auf den Ablagekonsolen absetzbar. Nach dem Absetzen des Traggestänges in den Ablagekonsolen wird das Traggestänge über die Ablagekonsolen zumindest teilweise vom Rahmen der Vorrichtung getragen. Die Hubvorrichtung wird dadurch entlastet. Über die Ablagekonsolen wird das Traggestänge während des Transports auch an zusätzlichen Punkten gehalten, wodurch die Neigung zu gefährlichen Schwingungszuständen in der Vorrichtung während des Transports verringert wird. Es kann die Möglichkeit vorgesehen sein, die in einer Ablagekonsole gehaltenen Gestängeabschnitte mit der jeweiligen Ablagekonsole zu verriegeln, um Relativbewegungen zwischen den Gestängeabschnitten und der Vorrichtung während des Transports auszuschließen.

Nach einer Ausgestaltung der Erfindung werden die vertikalen Lasten aus dem Traggestänge in der Gebrauchsstellung zumindest teilweise über einen Stützpfosten auf den Rahmen der Vorrichtung übertragen, und der Stützpfosten ist um eine Schwenkachse in eine Transportstellung verlagerbar, in der der Stützpfosten um ein geringeres Maß über die Schlauchtrommel übersteht als in seiner Gebrauchsstellung. Das Traggestänge kann so konstruiert sein, dass der Stützpfosten das am höchsten aufragende Bauteil der Konstruktion ist. Wenn der obere Teil des Stützpfostens in eine tiefere Position verschwenkbar ist, kann dadurch die Bauhöhe des Traggestänges auf einer einfache Weise verringert werden.

Nach einer Ausgestaltung der Erfindung ist das Traggestänge in seiner Grundkonstruktion als ein Scherengitter ausgebildet, dessen äußere Abschnitte über schräg im Raum angeordnete Tragseile abgestützt sind, die an einem ersten Ende mit dem Traggestänge verbunden und die an einem zweiten Ende über den Stützpfosten geführt sind. Ein Scherengitter ist ein Bauteil, dessen Länge in Erstreckungsrichtung auf einfache Weise variabel ist. Gleichzeitig vermag das Scherengitter Traglasten in sich aufzunehmen, die ausreichen, um einer Ausbringleitung in einer gewünschten Höhe zu halten.

Nach einer Ausgestaltung der Erfindung ist die Ausbringleitung über Abzweiganschlüsse mit mehreren über die Länge der Ausbringleitung verteilt angeordneten Düsen verbunden und zwischen den Abzweiganschlüssen und den daran jeweils angeschlossenen Düsen ist jeweils eine Fallleitung angeordnet, durch die die daran angeschlossene Düse in einer Höhe gehalten ist, die sich zwischen dem untersten Punkt des Traggestänges und der zu beregnenden Fläche befindet. Nach dieser Ausgestaltung wird das über den Versorgungsschlauch zuströmende Wasser über die Ausbringleitung in Querrichtung zur Rotationsachse der Ausbringleitung verteilt und den Düsen zugeleitet, die sich allerdings nicht in der Höhe der Ausbringleitung befinden, sondern in einer tieferen Ebene. Durch die vorgeschlagene Konstruktion wird der Nachteil überwunden, der sich aus dem Umstand ergibt, dass die Ausbringleitung in der Gebrauchsstellung sehr hoch angeordnet ist, um über der Schlauchtrommel rotieren zu können. Um Druckverluste zu kompensieren, die sich an jedem Abzweiganschluss durch die Wassermenge ergeben können, die dort in eine Fallleitung abgezweigt wird, können einzelne oder mehrere Abzweiganschlüsse mit verstellbaren Drosselventilen ausgestattet sein, die so eingestellt sein können, dass das aus den mit der Ausbringleitung verbundenen Düsen austretende Wasser an allen Düsen mit einem zumindest annähernd gleichen Druck austritt.

Nach einer Ausgestaltung der Erfindung sind die Düsen in der Gebrauchsstellung des Traggestänges von den Fallleitungen in einer Höhe gehalten, in der sie einen Abstand von zumindest 20 % des Abstandmaßes zwischen dem untersten Punkt des Traggestänges und der zu beregnenden Oberfläche in vertikaler Richtung zum untersten Punkt des Traggestänges und der zu beregnenden Fläche einhalten. Bei diesem Abstandswert befinden sich die Düsen in einer bodennahen Ebene, in der die Fallstrecke für das Wasser zwischen der Düse und der zu bewässernden Bodenfläche nur noch gering ist. Dadurch kann das ausgebrachte Wasser auch bei starkem Wind kaum noch seitlich verweht werden, und auch der bei der Ausbringung verdunstende Anteil des von den Düsen ausgestoßenen Wassers bleibt selbst bei hohen Temperaturen gering.

Nach einer Ausgestaltung der Erfindung sind die Fallleitungen aus einem flexiblen Kunststoffmaterial hergestellt. Durch das flexible Kunststoffmaterial können die Fallleitungen leicht ausweichen, wenn sie bei ihrer Rotationsbewegung auf ein Hindernis auftreffen. Das Schadens- und Betriebsunterbrechungsrisiko beim Betrieb der selbstfahrenden Vorrichtung wird dadurch verringert.

Nach einer Ausgestaltung der Erfindung sind um die Düsen herum elastische Formkörper angebracht. Die elastischen Formkörper dienen dem Zweck, Verletzungen von Personen oder Tieren zu vermeiden, die sich im Rotationsbereich der Ausbringleitung aufhalten und beim Betrieb der Vorrichtung von einer Düse getroffen werden könnten. Wenn eine Düse mit einem elastischen Formkörper umgeben ist, trifft nicht mehr die Düse, sondern der elastische Formkörper auf eine Person oder ein Tier. Der elastische Formkörper kann als ein Luftkissen, wie beispielsweise ein mit Luft gefüllter Gummischlauch, als Schaumstoffkörper, als Wattepolster oder auf eine sonstige Weise ausgestaltet sein. Eine solche Sicherheitsvorkehrung ist insbesondere dann sinnvoll, wenn die selbstfahrende Vorrichtung in einem Automatikmodus ohne einen anwesenden Fahrer betrieben wird.

Nach einer Ausgestaltung der Erfindung wird das auszubringende Wasser mit einem Druck aus den Düsen ausgeblasen, der unterhalb eines Wertes von 3 bar, insbesondere unterhalb eines Wertes von 2 bar, liegt. Durch die Anordnung der Düsen an einer rotierend angetriebenen Ausbringleitung kann der sonst übliche Wasserdruck in Vorrichtungen zur Feldbewässerung, der üblicherweise bei ca. 5 bar liegt, deutlich abgesenkt werden. Durch die Mehrzahl der Düsen und die mehrfache Passage einer Bodenfläche mit mehreren Düsen während einer Überfahrt der Bodenfläche mit der Vorrichtung kann trotz des geringeren Wasserdrucks dieselbe Wassermenge auf die Bodenfläche in einer längeren Ausbringzeit ausgebracht werden als in den herkömmlichen Bewässerungsanlagen, die mit einem kürzeren Zeitintervall für die Ausbringung, aber einem höheren Wasserdruck arbeiten. Ausreichende Wassermengen können schon mit Wasserdrücken an der Düse von 3 bar oder weniger, insbesondere auch von 2 bar oder weniger, ausgebracht werden. Der geringere Betriebsdruck ermöglicht Energieeinsparungen bei der Wasserpumpe, die Wasser in den Versorgungsschlauch einspeist. Außerdem können die Komponenten der Vorrichtung, die dem Wasserdruck ausgesetzt sind, auf geringere Betriebsdrücke hin ausgelegt werden, was Kosteneinsparungen ermöglicht. Durch die einfacheren Komponenten sinkt auch das Maschinengewicht, was Antriebsenergie einspart, wodurch insbesondere auch das Traggestänge leichter wird und nochmals größere Arbeitsbreiten möglich werden.

Nach einer Ausgestaltung der Erfindung weist die Vorrichtung ein Druckregelventil auf, mit dem der Wasserdruck in der Ausbringleitung verstellbar ist. Über das Druckregelventil ist es möglich, das Sprühbild der in der Vorrichtung verwendeten Düsen in einer gewünschten Weise zu verändern. Über die Druckregelung kann auch die Wassermenge reguliert werden, die bei einer Überfahrt auf eine zu bewässernde Ackerfläche aufgebracht wird.

Nach einer Ausgestaltung der Erfindung ist zwischen dem zweiten Ende des Versorgungsschlauchs und einer Verbindungsleitung eine doppelte Drehdurchführung zur Überleitung des vom Versorgungsschlauch herangeführten Wassers in die Ausbringleitung angeordnet, von denen die erste Drehdurchführung zwischen der Schlauchtrommel und einer Verbindungsleitung und die zweite Drehdurchführung zwischen der Verbindungsleitung und der Ausbringleitung angeordnet ist, und wobei beide Drehdurchführungen jeweils eine Dichtung zur Vermeidung von Wasserverlusten im Bereich der Drehdurchführungen aufweisen. Die Drehdurchführungen ermöglichen den abgedichteten Übergang des Wassers zwischen einem feststehenden Körper und einem rotierenden Körper. In der selbstfahrenden Vorrichtung ist der feststehende Körper die Verbindungsleitung, die die Schlauchtrommel mit der Ausbringleitung verbindet. Da sich die Ausbringleitung in der Gebrauchsstellung in einem Abstand oberhalb der Schlauchtrommel befindet, ist es erforderlich, das über den Versorgungsschlauch der selbstfahrenden Vorrichtung zugeführte Wasser mit der Verbindungsleitung von der Schlauchtrommel zu Ausbringleitung zu befördern. Da sich sowohl die Schlauchtrommel als auch die Ausbringleitung im Betrieb der Vorrichtung drehen und nur die Verbindungsleitung ortsfest in der Vorrichtung angeordnet ist, sind die beiden Drehdurchführungen erforderlich, um unangemessen hohe Wasserverluste an den jeweiligen Übergabestellen zu vermeiden. Eventuelle Druckverluste und Strömungswiderstände im Übergabebereich können vermindert oder ganz vermieden werden, wenn die Drehdurchführungen jeweils als axiale Schnittstellen ausgebildet sind.

Nach einer Ausgestaltung der Erfindung weist die Vorrichtung eine elektronische Steuerung auf, mit der die selbstfahrende Vorrichtung insbesondere autonom ohne eine auf oder in der Vorrichtung sitzende Bedienperson betreibbar ist. Über die elektronische Steuerung kann insbesondere die Vorfahrtgeschwindigkeit sowie die Rotationsgeschwindigkeit der Vorrichtung gesteuert werden. Zusätzlich kann in die elektronische Steuerung auch noch eine Lenkfunktion integriert werden. Die elektronische Steuerung kann auch eine Schnittstelle für eine Navigationsvorrichtung mit einer Positionserkennung aufweisen. Weiter kann die elektronische Steuerung mit einer Sensorik verbunden sein, über die die einwandfreie Funktion der Bewässerung sowie die auf die verbesserte Fläche aufgebrachte Wassermenge erfasst und dokumentiert werden kann. In die elektronische Steuerung können auch Sicherheitsfunktionen wie beispielsweise eine sensorische Umfeldüberwachung zur Hinderniserkennung, Personenerkennung im Umfeld der Maschine, Notstoppeinrichtungen, Druckwächter für den Wasserdruck und dergleichen integriert sein. Die elektronische Steuerung kann eine Software aufweisen, die Daten aus einer zuvor erstellten Bewässerungskarte empfängt, in Stellbefehle für von der elektronischen Steuerung kontrollierten Komponenten der selbstfahrenden Vorrichtung verarbeitet und diese Stellbefehle an die entsprechenden Komponenten übermittelt. Die Software kann ihrerseits dazu ausgestattet sein, eine Bewässerungskarte zu dem ausgeführten Arbeitsgang zu erstellen und über eine Schnittstelle zu exportieren. Schließlich kann die elektronische Steuerung auch über eine Schnittstelle zur drahtlosen Kommunikation mit entfernten Computern verfügen, um mit den entfernten Computern Daten austauschen zu können. Der Datenaustausch kann beispielsweise im Rahmen einer Fernsteuerung der Maschine und/oder zur Betriebsoptimierung der Maschine genutzt werden.

Nach einer Ausgestaltung der Erfindung ist als motorischer Antrieb für das Traggestänge, für die Schlauchtrommel für den Fahrantrieb der selbstfahrenden Vorrichtung und/oder die Hubvorrichtung ein Elektromotor verwendet. Bei dem motorischen Antrieb für das Traggestänge handelt es sich um den Antrieb, mit dem das Traggestänge in eine rotierende Bewegung versetzt wird. Bei dem motorischen Antrieb für die Schlauchtrommel handelt es sich um den Antrieb, mit dem die Schlauchtrommel in eine rotierende Bewegung versetzt wird. Bei dem motorischen Antrieb für den Fahrantrieb der selbstfahrenden Vorrichtung handelt es sich um den Antrieb, mit dem die Vorrichtung bewegt wird. Bei dem motorischen Antrieb für die Hubvorrichtung handelt es sich um den Antrieb, mit dem das Traggestänge angehoben oder abgesenkt wird. Für all dieser Antriebe ist es vorteilhaft, wenn diese in ihrer Bewegung präzise gesteuert und kontrolliert werden können. Eine präzise Steuerung und Kontrolle ist insbesondere bei Elektromotoren möglich. Diese können beispielsweise als Servomotoren ausgebildet sein, die über eine entsprechende Software in ihrer Bewegung präzise und stufenlos einstellbar sind. Die Elektromotoren haben extrem kurze Reaktionszeiten, wenn es darum geht, den Antrieb anlaufen zu lassen, dessen Drehgeschwindigkeit zu verändern, Drehmomente zu verändern oder auch den Antrieb zu stoppen. Da für die Fahrbewegung der selbstfahrenden Vorrichtung, für die Rotationsbewegung des Traggestänges, für die Rotationsbewegung der Schlauchtrommel und für die Hubbewegung der Hubvorrichtung keine hohen Antriebsleistungen benötigt werden und die entsprechenden Maschinenelemente im Normalfall mit konstanter Drehzahl betrieben werden, ist die von den Elektromotoren im Arbeitsbetrieb benötigte Strommenge überschaubar. Bevorzugt werden die für den Betrieb der Elektromotoren benötigten Strommengen über einen Akkumulator bereitgestellt, der in der selbstfahrenden Vorrichtung installiert ist und während des Betriebs mitgeführt wird. Da die für den Betrieb der Vorrichtung benötigten Strommengen überschaubar sind, kann auch der Akkumulator entsprechend kostengünstig und gewichtssparend klein dimensioniert sein. Mit den Elektroantrieben der jeweiligen Komponenten ist insbesondere ein zuverlässig störungsfreier, wartungsarmer, automatisierter und fahrerloser Betrieb der Vorrichtung möglich. Elektromotorische Antriebe können gut von einer zentralen elektronischen Steuerung der Vorrichtung betrieben und kontrolliert werden.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, soweit dem keine technischen zwingenden Hindernisse entgegenstehen.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht auf eine schematische Darstellung einer selbstfahrenden Vorrichtung, bei der sich das Traggestänge in der Gebrauchsstellung befindet,
- Fig. 2:: eine Ansicht auf eine selbstfahrende Vorrichtung, bei der sich das Traggestänge in der Transportstellung befindet,
- Fig. 3 - 4:: eine Version mit Stützpfosten, die in ihre Transportstellung abklappbar ausgestaltet sind, und
- Fig. 5 - 7:: eine Version mit einem Scherengitter als Traggestänge,

Soweit dienlich sind in allen Figuren einander entsprechende Bauteile mit identischen Bezugsziffern bezeichnet. Aus Gründen der Übersichtlichkeit sind bei mehrfach auftretenden Bauteilen jedoch nicht stets alle mit Bezugsziffern versehen.

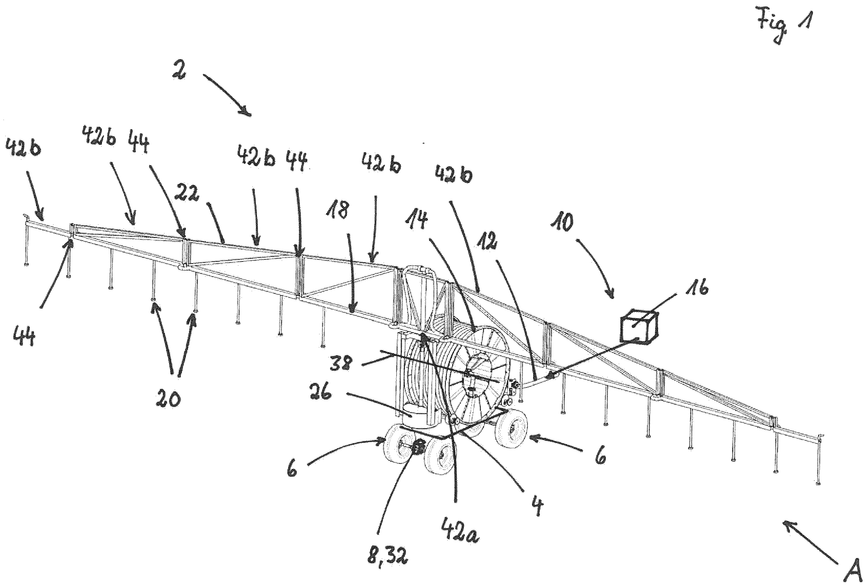

In Fig. 1 ist eine selbstfahrende Vorrichtung 2 zum Beregnen von Flächen mit einem Rahmen 4, einem Fahrwerk 6, einer Antriebsvorrichtung 8, einer Wasserversorgung 10, die einen Versorgungsschlauch 12 aufweist, der zumindest teilweise auf eine drehbar gelagerte Schlauchtrommel 14 aufgewickelt und der an einem ersten Ende mit einem Wasserzulauf 16, beispielsweise einer Pumpe oder einem Anschluss an eine fest verlegte Leitung, und an einem zweiten Ende mit einer mit der Wasserversorgung 10 verbundenen drehbar angeordneten Ausbringleitung 18 verbunden ist, und mit einer Anzahl von mit der Ausbringleitung 18 verbundenen und beabstandet zueinander angeordneten Düsen 20 zur Beregnung von Flächen. Die Antriebsvorrichtung 8 ist im Ausführungsbeispiel der Antrieb 32 für den Fahrantrieb. Der Antrieb 32 kann als Elektromotor ausgebildet sein.

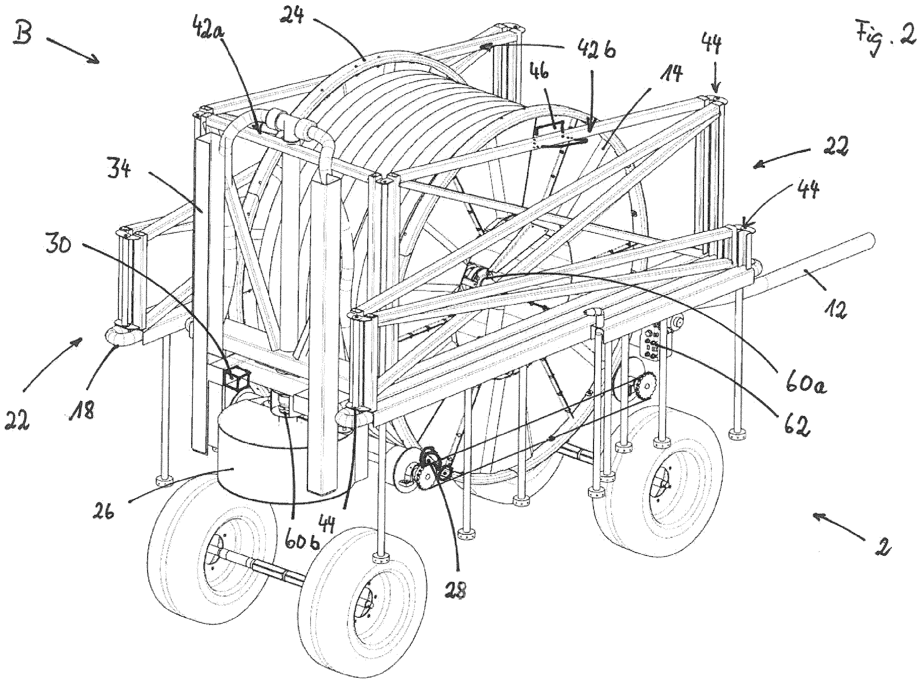

Die Ausbringleitung 18 ist faltbar ausgestaltet an einem auf der selbstfahrenden Vorrichtung 2 montierten, drehbeweglich mit der selbstfahrenden Vorrichtung 2 verbundenen und ebenfalls faltbar ausgestalteten Traggestänge 22 befestigt. Die Ausbringleitung 18 und das Traggestänge 22 sind zwischen der in Fig. 1 dargestellten Gebrauchsstellung A und einer in Fig. 2 gezeigten Transportstellung B hin und her verlagerbar.

Das Traggestänge 22 befindet sich in der in Fig. 1 gezeigten Gebrauchsstellung A in einer Ebene oberhalb der Schlauchtrommel 14. In der in Fig. 2 gezeigten Transportstellung B ist das Traggestänge 22 vollständig in eine Ebene unterhalb des obersten Punktes 24 der Schlauchtrommel 14 verlagert worden. Das Traggestänge 22 ist mit einem Antrieb 26 antriebsverbunden, mit dem das Traggestänge 22 rotierend antreibbar ist. Bei dem Antrieb 26 kann es sich um einen Elektromotor handeln.

Die Schlauchtrommel 14 ist um eine quer zur Bewegungsrichtung der Vorrichtung 2 ausgerichtete Drehachse 38 im Rahmen 4 der Vorrichtung 2 drehbar gelagert. Die Schlauchtrommel 14 ist mit einem motorischen Antrieb 28 antriebsverbunden. Im gezeigten Ausführungsbeispiel handelt es sich bei dem Antrieb 28 um einen Elektromotor, der über ein Zahnrad eine Welle antreibt, auf der die Schlauchtrommel 14 auf einer Seite gelagert ist. Auf der gegenüberliegenden Seite befindet sich eine zweite Welle, die über einen Kettentrieb mit der ersten Welle antriebsverbunden ist.

In Fig. 2 ist das Traggestänge 22 in einem zusammengefalteten Zustand dargestellt. An den Faltstellen ist erkennbar, dass die Ausbringleitung 18 als ein flexibler Schlauch ausgebildet ist, der dort in Schlaufen gelegt ist. Das Traggestänge 22 ist im Ausführungsbeispiel in einem Hubgerüst gehalten. Es kann dort mittels einer Hubvorrichtung 34 mit dem motorischen Antrieb 30 zwischen der Gebrauchsstellung A und der Transportstellung B höhenverstellbar auf- und abwärts bewegt werden.

Das Traggestänge 22 weist über seine Arbeitsbreite verteilt mehrere Gestängeabschnitte 42 auf, die über Gelenke 44 miteinander verbunden sind. Das Traggestänge 22 weist einen mittleren Gestängeabschnitt 42a auf, der sich zumindest annähernd parallel und beabstandet zur Drehachse 38 der Schlauchtrommel 14 erstreckt. Die Breite des mittleren Gestängeabschnitt 42a entspricht zumindest annähernd der Breite der Schlauchtrommel 14. In Quererstreckungsrichtung des Traggestänges 22 schließen sich an die Seiten des mittleren Gestängeabschnitts 42a weitere Gestängeabschnitte 42b an, die in ihrer Transportstellung B seitlich an die Schlauchtrommel 14 in einer zur Fahrtrichtung der Vorrichtung 2 parallelen Ausrichtung angelegt sind, wie in Fig. 2 gezeigt. Die sich in Quererstreckungsrichtung des Traggestänges 22 an jede Seite des mittleren Gestängeabschnitts 42a anschließende mehrere weitere Gestängeabschnitte 42b sind miteinander verkettet und an einer Verkettungsstelle gelenkig miteinander verbunden, wobei die miteinander verketteten Gestängeabschnitte 42b wie für das Ausführungsbeispiel in Fig. 2 gezeigt in ihrer Transportstellung B seitlich an die Schlauchtrommel 14 angelegt und über die Gelenke 44 Z-förmig aufgefaltet an der Schlauchtrommel 14 gehalten sind. Der mittlere Gestängeabschnitt 42a ist über eine motorisch angetriebene Hubvorrichtung 34 höhenverstellbar ausgebildet. Die sich in Quererstreckungsrichtung des Traggestänges 22 an jede Seite des mittleren Gestängeabschnitts 42a anschließenden weiteren Gestängeabschnitte 42b sind über den mittleren Gestängeabschnitt 42a höhenverstellbar.

An der Vorrichtung 2 sind Ablagekonsolen 46 ausgebildet, an denen das Traggestänge 22 in seiner Transportstellung rahmenseitig abgestützt gehalten ist, und die in der Transportstellung B von den Ablagekonsolen 46 gehaltenen Teile des Traggestänges 22 sind mit der Hubvorrichtung 34 auf den Ablagekonsolen 46 absetzbar.

Die Vorrichtung 2 eine elektronische Steuerung 62 aufweist, mit der die selbstfahrende Vorrichtung 2 insbesondere autonom ohne eine auf oder in der Vorrichtung 2 sitzende Bedienperson betreibbar ist.

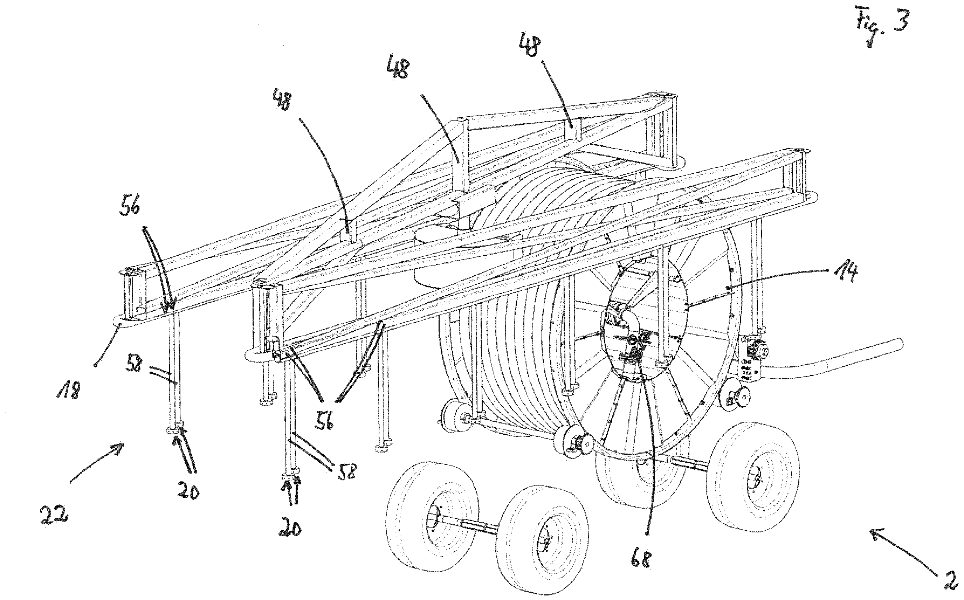

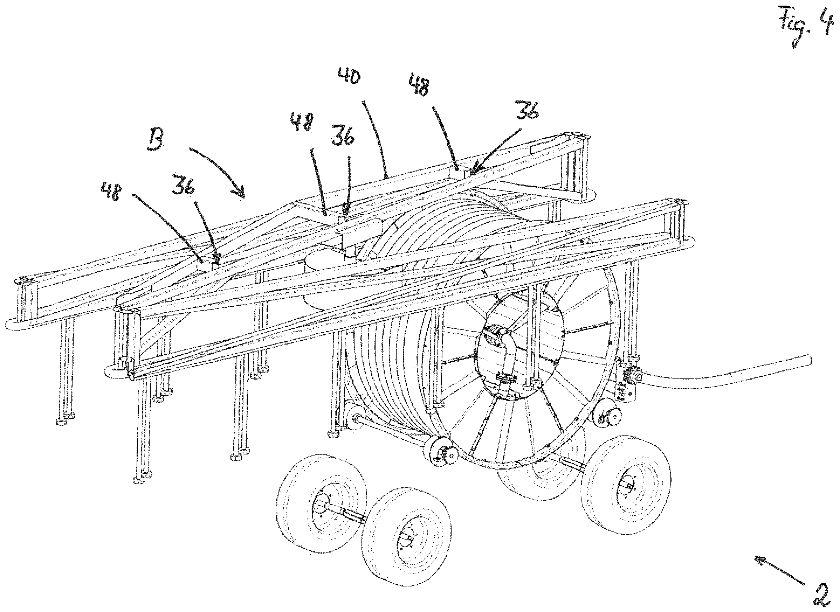

In den Fig. 3 und 4 ist eine abgewandelte Ausführung einer selbstfahrenden Vorrichtung mit einem in die Transportstellung B abgesenkten Traggestänge 22 dargestellt. Die vertikalen Lasten aus dem Traggestänge 22 werden in dessen Gebrauchsstellung A zumindest teilweise über einen oder mehrere Stützpfosten 48 auf den Rahmen 4 der Vorrichtung 2 übertragen. Die Stützpfosten 48 sind in der in Fig. 4 dargestellten Position um eine Schwenkachse in ihre Transportstellung B abgeklappt, in der die Stützpfosten 48 um ein geringeres Maß über die Schlauchtrommel 14 überstehen als in ihrer Gebrauchsstellung A. Mit den Stützpfosten 48 und den übrigen damit gemeinsam klappbaren Rahmenteilen ist zumindest ein Teil 40 des Traggestänges 22 mittels einer entsprechenden Klappvorrichtung 36 aus der Gebrauchsstellung A nach unten in die Transport-stellung B und aus der Transportstellung B nach oben zurück in die Gebrauchsstellung A klappbar ist. Zumindest ein klappbarer Teil 40 des Tragwerks des Traggestänges 22 ist dort mittels einer entsprechenden Klappvorrichtung 36 aus der Gebrauchsstellung A in eine Transportstellung B nach unten klappbar. Die in Fig. 3 gezeigte Vorrichtung 2 weist ein Druckregelventil 68 auf, mit dem der Wasserdruck in der Ausbringleitung 18 verstellbar ist.

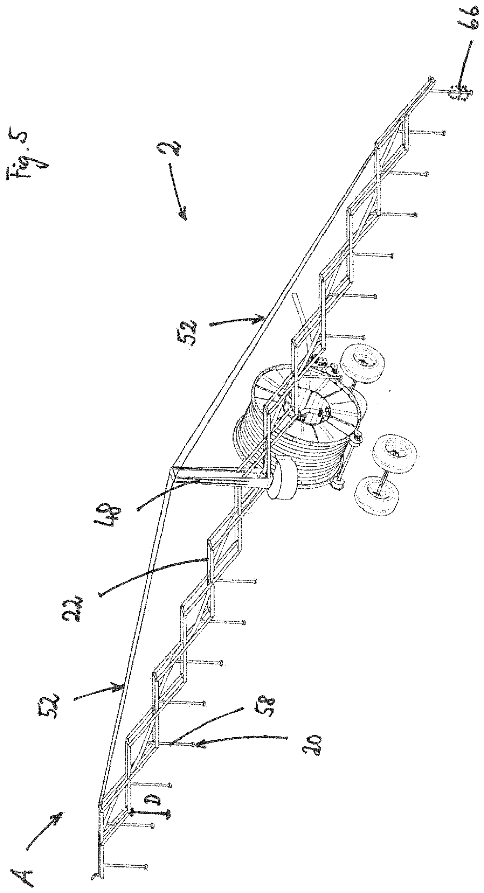

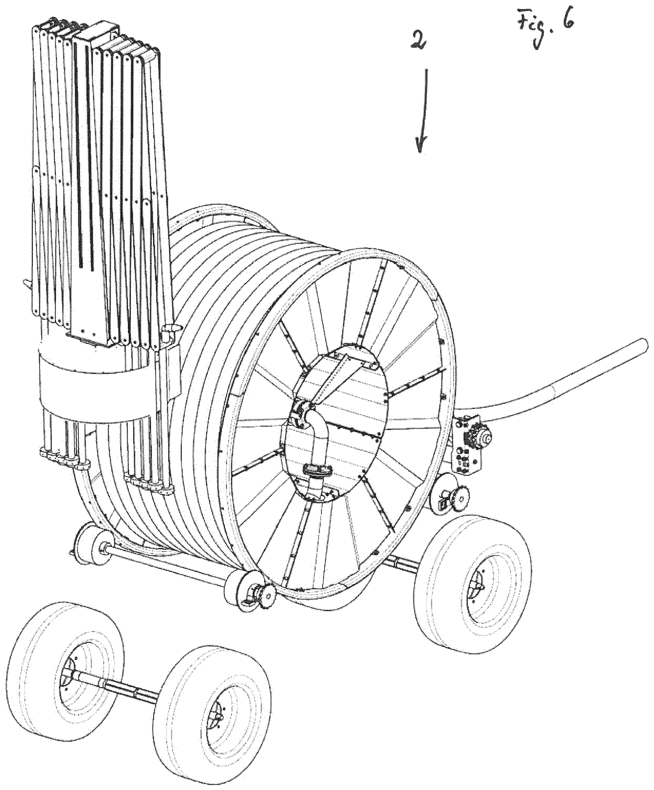

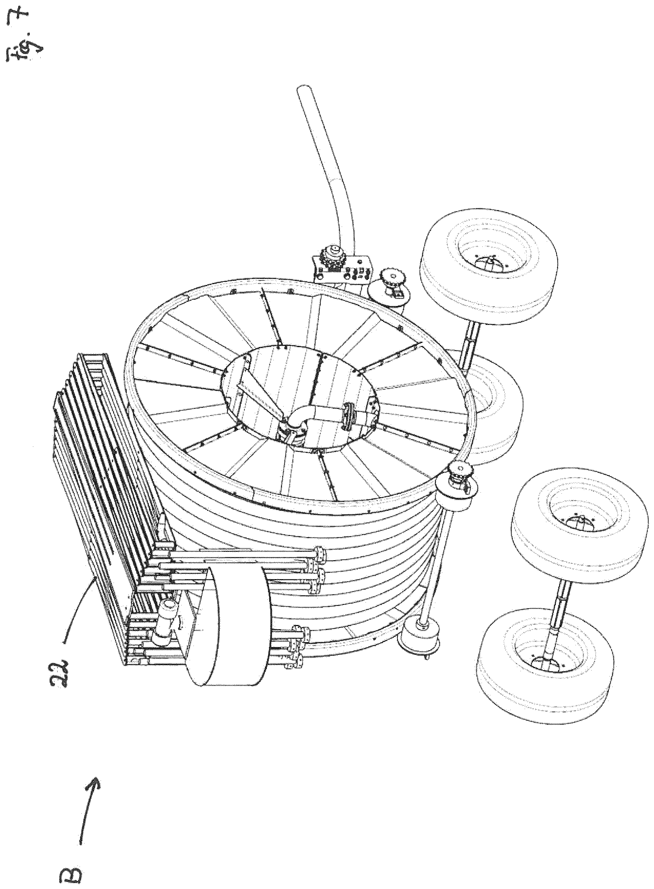

In den Fig. 5, 6 und 7 ist eine abgewandelte Ausführung der Vorrichtung als eine Version mit einem Scherengitter als Traggestänge 22 gezeigt, und zwar in der Fig. 5 mit dem Traggestänge 22 in der Gebrauchsstellung A und in der Fig. 7 in der Transportstellung B. in der Fig. 6 ist eine Zwischenposition gezeigt, in der das Scherengitter des Tragegestänges 22 zwar schon zusammengeklappt, aber noch nicht in die in Fig. 7 gezeigte Position nach unten geklappt worden ist. Das Traggestänge 22 ist in seiner Grundkonstruktion als ein Scherengitter 50 ausgebildet, dessen äußere Abschnitte über schräg im Raum angeordnete Tragseile 52 abgestützt sind, die an einem ersten Ende mit dem Traggestänge 22 verbunden und die an einem zweiten Ende über den Stützpfosten 48 geführt sind.

Wie in den Fig. 1 - 7 zu sehen ist, ist die Ausbringleitung 18 über Abzweiganschlüsse 56 mit mehreren über die Länge der Ausbringleitung 18 verteilt angeordneten Düsen 20 verbunden und zwischen den Abzweiganschlüssen 56 und den daran jeweils angeschlossenen Düsen 20 ist jeweils eine Fallleitung 58 angeordnet, durch die die daran angeschlossene Düse 20 in einer Höhe gehalten ist, die sich zwischen dem untersten Punkt des Traggestänges 22 und der zu beregnenden Fläche befindet. Die Düsen 20 sind in der Gebrauchsstellung A des Traggestänges 22 von den Fallleitungen 58 in einer Höhe gehalten, in der sie einen Abstand von zumindest 20 % des Abstandmaßes D zwischen dem untersten Punkt des Traggestänges 22 und der zu beregnenden Oberfläche in vertikaler Richtung zum untersten Punkt des Traggestänges 22 und der zu beregnenden Fläche einhalten. Um die Düsen 20 herum können elastische Formkörper 66 angebracht sein, von denen in Fig. 5 ein Beispiel in gepunkteten Linien eingezeichnet ist.

In Fig. 2 sind zwischen dem zweiten Ende des Versorgungsschlauchs 12 und der Ausbringleitung 18 zwei Drehdurchführungen 60 zur Überleitung des vom Versorgungsschlauch 12 herangeführten Wassers in die Ausbringleitung 18 angeordnet, von denen die erste Drehdurchführung 60a zwischen der Schlauchtrommel 14 und einer Verbindungsleitung 54 und die zweite Drehdurchführung 60b zwischen der Verbindungsleitung 54 und der Ausbringleitung 18 angeordnet ist. Beide Drehdurchführungen 60a, 60b weisen jeweils eine Dichtung zur Vermeidung von Wasserverlusten im Bereich der Drehdurchführungen 60a, 60b auf.

Die Erfindung ist nicht auf die vorstehend beschriebenen Ausführungsbeispiele beschränkt. Dem Fachmann bereitet es keine Schwierigkeiten, die Ausführungsbeispiele auf eine ihm geeignet erscheinende Weise abzuwandeln, um es an einen konkreten Anwendungsfall anzupassen.

### Bezugszeichenliste

- 2: Vorrichtung
- 4: Rahmen
- 6: Fahrwerk
- 8: Antriebsvorrichtung
- 10: Wasserversorgung
- 12: Versorgungsschlauch
- 14: Schlauchtrommel
- 16: Wasserzulauf
- 18: Ausbringleitung
- 20: Düse
- 22: Traggestänge
- 24: oberster Punkt
- 26: Antrieb für Traggestänge
- 28: Antrieb für Schlauchtrommel
- 30: Antrieb für Hubvorrichtung
- 32: Antrieb für Fahrantrieb
- 34: Hubvorrichtung
- 36: Klappvorrichtung
- 38: Drehachse
- 40: klappbarer Teil
- 42: Gestängeabschnitt
- 42a: mittlerer Gestängeabschnitt
- 42b: seitlicher Gestängeabschnitt
- 44: Gelenk
- 46: Ablagekonsole
- 48: Stützpfosten
- 50: Scherengitter
- 52: Tragseil
- 54: Verbindungsleitung
- 56: Abzweiganschluss
- 58: Fallleitung
- 60: Drehdurchführung
- 62: elektronische Steuerung
- 66: Formkörper
- 68: Druckregelventil
- A: Gebrauchsstellung
- B: Transportstellung
- D: Abstandsmaß

## Patentansprüche

1. Selbstfahrende Vorrichtung (2) zum Beregnen von Flächen mit einem Rahmen (4), einem Fahrwerk (6), einer Antriebsvorrichtung (8), einer Wasserversorgung (10), die einen Versorgungsschlauch (12) aufweist, der zumindest teilweise auf eine drehbar gelagerte Schlauchtrommel (14) aufgewickelt und der an einem ersten Ende mit einem Wasserzulauf (16) und an einem zweiten Ende mit einer mit der Wasserversorgung (10) verbundenen drehbar angeordneten Ausbringleitung (18) verbunden ist, und mit einer Anzahl von mit der Ausbringleitung (18) verbundenen und beabstandet zueinander angeordneten Düsen (20) zur Beregnung von Flächen, **dadurch gekennzeichnet, dass** die Ausbringleitung (18) faltbar ausgestaltet an einem auf der selbstfahrenden Vorrichtung (2) montierten, drehbeweglich mit der selbstfahrenden Vorrichtung (2) verbundenen faltbar ausgestalteten Traggestänge (22) befestigt ist, das Traggestänge (22) in der Gebrauchsstellung (A) in einer Ebene oberhalb der Schlauchtrommel (14) gehalten ist, die Ausbringleitung (18) und das Traggestänge (22) zwischen einer Gebrauchsstellung (A) und einer Transportstellung (B) hin und her verlagerbar sind, und das Traggestänge (22) mit einem Antrieb (26) antriebsverbunden ist, mit dem das Traggestänge (22) rotierend antreibbar ist.

2. Selbstfahrende Vorrichtung (2) nach Anspruch 1, **dadurch gekennzeichnet, dass** das Traggestänge (22) in der Transportstellung (B) zumindest teilweise in eine Ebene unterhalb des obersten Punktes (24) der Schlauchtrommel (14) verlagerbar ist.

3. Selbstfahrende Vorrichtung (2) nach Anspruch 1 oder 2, **dadurch gekennzeichnet, dass** die Schlauchtrommel (14) um eine quer zur Bewegungsrichtung der Vorrichtung (2) ausgerichtete Drehachse (38) im Rahmen (4) der Vorrichtung (2) drehbar gelagert.

4. Selbstfahrende Vorrichtung (2) nach einem der vorhergehenden Ansprüche, **dadurch gekennzeichnet, dass** die Schlauchtrommel (14) mit einem motorischen Antrieb (28) antriebsverbunden ist.

5. Selbstfahrende Vorrichtung (2) nach einem der vorhergehenden Ansprüche, **dadurch gekennzeichnet, dass** die Ausbringleitung (18) als ein flexibler Schlauch ausgebildet ist.

6. Selbstfahrende Vorrichtung (2) nach einem der vorhergehenden Ansprüche, **dadurch gekennzeichnet, dass** das Traggestänge (22) mittels einer Hubvorrichtung (34) mit einem motorischen Antrieb (30) zwischen der Gebrauchsstellung (A) und der Transportstellung (B) höhenverstellbar im Rahmen (4) gehalten ist.

7. Selbstfahrende Vorrichtung (2) nach einem der vorhergehenden Ansprüche, **dadurch gekennzeichnet, dass** zumindest ein Teil (40) des Traggestänges (22) mittels einer entsprechenden Klappvorrichtung (36) aus der Gebrauchsstellung (A) nach unten in die Transportstellung (B) und aus der Transportstellung (B) nach oben zurück in die Gebrauchsstellung (A) klappbar ist.

8. Selbstfahrende Vorrichtung (2) nach Anspruch 7, **dadurch gekennzeichnet, dass** zumindest ein klappbarer Teil (40) des Tragwerks des Traggestänges (22) mittels einer entsprechenden Klappvorrichtung (36) aus seiner Gebrauchsstellung (A) in eine Transportstellung (B) nach unten klappbar ist.

9. Selbstfahrende Vorrichtung (2) nach einem der vorhergehenden Ansprüche, **dadurch gekennzeichnet, dass** das Traggestänge (22) über seine Arbeitsbreite verteilt mehrere Gestängeabschnitte (42) aufweist, die über Gelenke (44) miteinander verbunden sind, das Traggestänge (22) einen mittleren Gestängeabschnitt (42a) aufweist, der sich zumindest annähernd parallel und beabstandet zur Drehachse (38) der Schlauchtrommel (14) erstreckt und dessen Breite der Breite der Schlauchtrommel (14) zumindest annähernd entspricht, und sich in Quererstreckungsrichtung des Traggestänges (22) an die Seiten des mittleren Gestängeabschnitts (42a) weitere Gestängeabschnitte (42b) anschließen, die in ihrer Transportstellung (B) seitlich an die Schlauchtrommel (14) in einer zur Fahrtrichtung der Vorrichtung (2) parallelen Ausrichtung angelegt sind.

10. Selbstfahrende Vorrichtung (2) nach den Anspruch 9, **dadurch gekennzeichnet, dass** sich in Quererstreckungsrichtung des Traggestänges (22) an jede Seite des mittleren Gestängeabschnitts (42a) mehrere weitere Gestängeabschnitte (42b) anschließen, die miteinander verkettet und an einer Verkettungsstelle gelenkig miteinander verbunden sind, wobei die miteinander verketteten Gestängeabschnitte (42b) in ihrer Transportstellung (B) seitlich an die Schlauchtrommel (14) angelegt und über die Gelenke (44) Z-förmig aufgefaltet an der Schlauchtrommel (14) gehalten sind.

11. Selbstfahrende Vorrichtung (2) nach den Anspruch 9 oder 10, **dadurch gekennzeichnet, dass** der mittlere Gestängeabschnitt (42a) über eine motorisch angetriebene Hubvorrichtung (34) höhenverstellbar ausgebildet ist und die sich in Quererstreckungsrichtung des Traggestänges (22) an jede Seite des mittleren Gestängeabschnitts (42a) anschließenden weiteren Gestängeabschnitte (42b) über den mittleren Gestängeabschnitt (42a) höhenverstellbar ausgebildet sind.

12. Selbstfahrende Vorrichtung (2) nach einem der Ansprüche 6 bis 11, **dadurch gekennzeichnet, dass** an der Vorrichtung (2) Ablagekonsolen (46) ausgebildet sind, an denen das Traggestänge (22) in seiner Transportstellung rahmenseitig abgestützt gehalten ist, und die in der Transportstellung (B) von den Ablagekonsolen (46) gehaltenen Teile des Traggestänges (22) mit der Hubvorrichtung (34) auf den Ablagekonsolen (46) absetzbar sind.

13. Selbstfahrende Vorrichtung (2) nach einem der Ansprüche 6 bis 12, **dadurch gekennzeichnet, dass** die vertikalen Lasten aus dem Traggestänge (22) in dessen Gebrauchsstellung (A) zumindest teilweise über einen Stützpfosten (48) auf den Rahmen (4) der Vorrichtung (2) übertragen werden, und der Stützpfosten (48) um eine Schwenkachse in eine Transportstellung (B) verlagerbar ist, in der der Stützpfosten (48) um ein geringeres Maß über die Schlauchtrommel (14) übersteht als in seiner Gebrauchsstellung (A).

14. Selbstfahrende Vorrichtung (2) nach Anspruch 13, **dadurch gekennzeichnet, dass** das Traggestänge (22) in seiner Grundkonstruktion als ein Scherengitter (50) ausgebildet ist, dessen äußere Abschnitte über schräg im Raum angeordnete Tragseile (52) abgestützt sind, die an einem ersten Ende mit dem Traggestänge (22) verbunden und die an einem zweiten Ende über den Stützpfosten (48) geführt sind.

15. Selbstfahrende Vorrichtung (2) nach einem der vorhergehenden Ansprüche, **dadurch gekennzeichnet, dass** die Ausbringleitung (18) über Abzweiganschlüsse (56) mit mehreren über die Länge der Ausbringleitung (18) verteilt angeordneten Düsen (20) verbunden ist und zwischen den Abzweiganschlüssen (56) und den daran jeweils angeschlossenen Düsen (20) jeweils eine Fallleitung (58) angeordnet ist, durch die die daran angeschlossene Düse (20) in einer Höhe gehalten ist, die sich zwischen dem untersten Punkt des Traggestänges (22) und der zu beregnenden Fläche befindet.

16. Selbstfahrende Vorrichtung (2) nach Anspruch 15, **dadurch gekennzeichnet, dass** die Düsen (20) in der Gebrauchsstellung (A) des Traggestänges (22) von den Fallleitungen (58) in einer Höhe gehalten sind, in der sie einen Abstand von zumindest 20 % des Abstandmaßes (D) zwischen dem untersten Punkt des Traggestänges (22) und der zu beregnenden Oberfläche in vertikaler Richtung zum untersten Punkt des Traggestänges (22) und der zu beregnenden Fläche einhalten.

17. Selbstfahrende Vorrichtung (2) nach Anspruch 15 oder 16, **dadurch gekennzeichnet, dass** die Fallleitungen (58) aus einem flexiblen Kunststoffmaterial hergestellt sind.

18. Selbstfahrende Vorrichtung (2) nach einem der vorhergehenden Ansprüche, **dadurch gekennzeichnet, dass** um die Düsen (20) herum elastische Formkörper (66) angebracht sind.

19. Selbstfahrende Vorrichtung (2) nach einem der vorhergehenden Ansprüche, **dadurch gekennzeichnet, dass** das auszubringende Wasser mit einem Druck aus den Düsen (20) ausgeblasen wird, der unterhalb eines Wertes von 3 bar, insbesondere unterhalb eines Wertes von 2 bar, liegt.

20. Selbstfahrende Vorrichtung (2) nach einem der vorhergehenden Ansprüche, **dadurch gekennzeichnet, dass** die Vorrichtung (2) ein Druckregelventil (68) aufweist, mit dem der Wasserdruck in der Ausbringleitung (18) verstellbar ist.

21. Selbstfahrende Vorrichtung (2) nach einem der vorhergehenden Ansprüche, **dadurch gekennzeichnet, dass** zwischen dem zweiten Ende des Versorgungsschlauchs (12) und der Ausbringleitung (18) zwei Drehdurchführungen (60) zur Überleitung des vom Versorgungsschlauch (12) herangeführten Wassers in die Ausbringleitung (18) angeordnet sind, von denen die erste Drehdurchführung (60a) zwischen der Schlauchtrommel (14) und einer Verbindungsleitung (54) und die zweite Drehdurchführung (60b) zwischen der Verbindungsleitung (54) und der Ausbringleitung (18) angeordnet ist, und wobei beide Drehdurchführungen (60a, 60b) jeweils eine Dichtung zur Vermeidung von Wasserverlusten im Bereich der Drehdurchführungen (60a, 60b) aufweisen.

22. Selbstfahrende Vorrichtung (2) nach einem der vorhergehenden Ansprüche, **dadurch gekennzeichnet, dass** die Vorrichtung (2) eine elektronische Steuerung (62) aufweist, mit der die selbstfahrende Vorrichtung (2) insbesondere autonom ohne eine auf oder in der Vorrichtung (2) sitzende Bedienperson betreibbar ist.

23. Selbstfahrende Vorrichtung (2) nach einem der vorhergehenden Ansprüche, **dadurch gekennzeichnet, dass** als motorischer Antrieb (26, 28, 30, 32) für das Traggestänge (22), für die Schlauchtrommel (14) für den Fahrantrieb der selbstfahrenden Vorrichtung (2) und/oder die Hubvorrichtung (34) ein Elektromotor verwendet ist.

## Geänderte Patentansprüche

### Geänderte Patentansprüche gemäss Regel 137(2) EPÜ.

1. Selbstfahrende Vorrichtung (2) zum Beregnen von Flächen mit einem Rahmen (4), einem Fahrwerk (6), einer Antriebsvorrichtung (8), einer Wasserversorgung (10), die einen Versorgungsschlauch (12) aufweist, der zumindest teilweise auf eine drehbar gelagerte Schlauchtrommel (14) aufgewickelt und der an einem ersten Ende mit einem Wasserzulauf (16) und an einem zweiten Ende mit einer mit der Wasserversorgung (10) verbundenen drehbar angeordneten Ausbringleitung (18) verbunden ist, und mit einer Anzahl von mit der Ausbringleitung (18) verbundenen und beabstandet zueinander angeordneten Düsen (20) zur Beregnung von Flächen, wobei die Ausbringleitung (18) an einem auf der selbstfahrenden Vorrichtung (2) montierten, drehbeweglich mit der selbstfahrenden Vorrichtung (2) verbundenen Traggestänge (22) befestigt ist, das in der Gebrauchsstellung (A) in einer Ebene oberhalb der Schlauchtrommel (14) gehalten ist, **dadurch gekennzeichnet, dass** das Traggestänge (22) faltbar ausgestaltet ist, die Ausbringleitung (18) faltbar ausgestaltet an dem Traggestänge (22) befestigt ist, die Ausbringleitung (18) und das Traggestänge (22) zwischen einer Gebrauchsstellung (A) und einer Transportstellung (B) hin und her verlagerbar sind, und das Traggestänge (22) mit einem motorischen Antrieb (26) antriebsverbunden ist, mit dem das Traggestänge (22) rotierend antreibbar und die Rotationsgeschwindigkeit der Ausbringleitung unabhängig vom Druck und der Strömungsgeschwindigkeit des auszubringenden Wassers auf einen ausgewählten oder vorgegebenen Wert einstellbar ist.

2. Selbstfahrende Vorrichtung (2) nach Anspruch 1, **dadurch gekennzeichnet, dass** das Traggestänge (22) in der Transportstellung (B) zumindest teilweise in eine Ebene unterhalb des obersten Punktes (24) der Schlauchtrommel (14) verlagerbar ist.

3. Selbstfahrende Vorrichtung (2) nach Anspruch 1 oder 2, **dadurch gekennzeichnet, dass** die Schlauchtrommel (14) um eine quer zur Bewegungsrichtung der Vorrichtung (2) ausgerichtete Drehachse (38) im Rahmen (4) der Vorrichtung (2) drehbar gelagert.

4. Selbstfahrende Vorrichtung (2) nach einem der vorhergehenden Ansprüche, **dadurch gekennzeichnet, dass** die Schlauchtrommel (14) mit einem motorischen Antrieb (28) antriebsverbunden ist.

5. Selbstfahrende Vorrichtung (2) nach einem der vorhergehenden Ansprüche, **dadurch gekennzeichnet, dass** die Ausbringleitung (18) als ein flexibler Schlauch ausgebildet ist.

6. Selbstfahrende Vorrichtung (2) nach einem der vorhergehenden Ansprüche, **dadurch gekennzeichnet, dass** das Traggestänge (22) mittels einer Hubvorrichtung (34) mit einem motorischen Antrieb (30) zwischen der Gebrauchsstellung (A) und der Transportstellung (B) höhenverstellbar im Rahmen (4) gehalten ist.

7. Selbstfahrende Vorrichtung (2) nach einem der vorhergehenden Ansprüche, **dadurch gekennzeichnet, dass** zumindest ein Teil (40) des Traggestänges (22) mittels einer entsprechenden Klappvorrichtung (36) aus der Gebrauchsstellung (A) nach unten in die Transportstellung (B) und aus der Transportstellung (B) nach oben zurück in die Gebrauchsstellung (A) klappbar ist.

8. Selbstfahrende Vorrichtung (2) nach Anspruch 7, **dadurch gekennzeichnet, dass** zumindest ein klappbarer Teil (40) des Tragwerks des Traggestänges (22) mittels einer entsprechenden Klappvorrichtung (36) aus seiner Gebrauchsstellung (A) in eine Transportstellung (B) nach unten klappbar ist.

9. Selbstfahrende Vorrichtung (2) nach einem der vorhergehenden Ansprüche, **dadurch gekennzeichnet, dass** das Traggestänge (22) über seine Arbeitsbreite verteilt mehrere Gestängeabschnitte (42) aufweist, die über Gelenke (44) miteinander verbunden sind, das Traggestänge (22) einen mittleren Gestängeabschnitt (42a) aufweist, der sich zumindest annähernd parallel und beabstandet zur Drehachse (38) der Schlauchtrommel (14) erstreckt und dessen Breite der Breite der Schlauchtrommel (14) zumindest annähernd entspricht, und sich in Quererstreckungsrichtung des Traggestänges (22) an die Seiten des mittleren Gestängeabschnitts (42a) weitere Gestängeabschnitte (42b) anschließen, die in ihrer Transportstellung (B) seitlich an die Schlauchtrommel (14) in einer zur Fahrtrichtung der Vorrichtung (2) parallelen Ausrichtung angelegt sind.

10. Selbstfahrende Vorrichtung (2) nach den Anspruch 9, **dadurch gekennzeichnet, dass** sich in Quererstreckungsrichtung des Traggestänges (22) an jede Seite des mittleren Gestängeabschnitts (42a) mehrere weitere Gestängeabschnitte (42b) anschließen, die miteinander verkettet und an einer Verkettungsstelle gelenkig miteinander verbunden sind, wobei die miteinander verketteten Gestängeabschnitte (42b) in ihrer Transportstellung (B) seitlich an die Schlauchtrommel (14) angelegt und über die Gelenke (44) Z-förmig aufgefaltet an der Schlauchtrommel (14) gehalten sind.

11. Selbstfahrende Vorrichtung (2) nach den Anspruch 9 oder 10, **dadurch gekennzeichnet, dass** der mittlere Gestängeabschnitt (42a) über eine motorisch angetriebene Hubvorrichtung (34) höhenverstellbar ausgebildet ist und die sich in Quererstreckungsrichtung des Traggestänges (22) an jede Seite des mittleren Gestängeabschnitts (42a) anschließenden weiteren Gestängeabschnitte (42b) über den mittleren Gestängeabschnitt (42a) höhenverstellbar ausgebildet sind.

12. Selbstfahrende Vorrichtung (2) nach einem der Ansprüche 6 bis 11, **dadurch gekennzeichnet, dass** an der Vorrichtung (2) Ablagekonsolen (46) ausgebildet sind, an denen das Traggestänge (22) in seiner Transportstellung rahmenseitig abgestützt gehalten ist, und die in der Transportstellung (B) von den Ablagekonsolen (46) gehaltenen Teile des Traggestänges (22) mit der Hubvorrichtung (34) auf den Ablagekonsolen (46) absetzbar sind.

13. Selbstfahrende Vorrichtung (2) nach einem der Ansprüche 6 bis 12, **dadurch gekennzeichnet, dass** die vertikalen Lasten aus dem Traggestänge (22) in dessen Gebrauchsstellung (A) zumindest teilweise über einen Stützpfosten (48) auf den Rahmen (4) der Vorrichtung (2) übertragen werden, und der Stützpfosten (48) um eine Schwenkachse in eine Transportstellung (B) verlagerbar ist, in der der Stützpfosten (48) um ein geringeres Maß über die Schlauchtrommel (14) übersteht als in seiner Gebrauchsstellung (A).

14. Selbstfahrende Vorrichtung (2) nach Anspruch 13, **dadurch gekennzeichnet, dass** das Traggestänge (22) in seiner Grundkonstruktion als ein Scherengitter (50) ausgebildet ist, dessen äußere Abschnitte über schräg im Raum angeordnete Tragseile (52) abgestützt sind, die an einem ersten Ende mit dem Traggestänge (22) verbunden und die an einem zweiten Ende über den Stützpfosten (48) geführt sind.

15. Selbstfahrende Vorrichtung (2) nach einem der vorhergehenden Ansprüche, **dadurch gekennzeichnet, dass** die Ausbringleitung (18) über Abzweiganschlüsse (56) mit mehreren über die Länge der Ausbringleitung (18) verteilt angeordneten Düsen (20) verbunden ist und zwischen den Abzweiganschlüssen (56) und den daran jeweils angeschlossenen Düsen (20) jeweils eine Fallleitung (58) angeordnet ist, durch die die daran angeschlossene Düse (20) in einer Höhe gehalten ist, die sich zwischen dem untersten Punkt des Traggestänges (22) und der zu beregnenden Fläche befindet.

16. Selbstfahrende Vorrichtung (2) nach Anspruch 15, **dadurch gekennzeichnet, dass** die Düsen (20) in der Gebrauchsstellung (A) des Traggestänges (22) von den Fallleitungen (58) in einer Höhe gehalten sind, in der sie einen Abstand von zumindest 20 % des Abstandmaßes (D) zwischen dem untersten Punkt des Traggestänges (22) und der zu beregnenden Oberfläche in vertikaler Richtung zum untersten Punkt des Traggestänges (22) und der zu beregnenden Fläche einhalten.

17. Selbstfahrende Vorrichtung (2) nach Anspruch 15 oder 16, **dadurch gekennzeichnet, dass** die Fallleitungen (58) aus einem flexiblen Kunststoffmaterial hergestellt sind.

18. Selbstfahrende Vorrichtung (2) nach einem der vorhergehenden Ansprüche, **dadurch gekennzeichnet, dass** um die Düsen (20) herum elastische Formkörper (66) angebracht sind.

19. Selbstfahrende Vorrichtung (2) nach einem der vorhergehenden Ansprüche, **dadurch gekennzeichnet, dass** das auszubringende Wasser mit einem Druck aus den Düsen (20) ausgeblasen wird, der unterhalb eines Wertes von 3 bar, insbesondere unterhalb eines Wertes von 2 bar, liegt.

20. Selbstfahrende Vorrichtung (2) nach einem der vorhergehenden Ansprüche, **dadurch gekennzeichnet, dass** die Vorrichtung (2) ein Druckregelventil (68) aufweist, mit dem der Wasserdruck in der Ausbringleitung (18) verstellbar ist.

21. Selbstfahrende Vorrichtung (2) nach einem der vorhergehenden Ansprüche, **dadurch gekennzeichnet, dass** zwischen dem zweiten Ende des Versorgungsschlauchs (12) und der Ausbringleitung (18) zwei Drehdurchführungen (60) zur Überleitung des vom Versorgungsschlauch (12) herangeführten Wassers in die Ausbringleitung (18) angeordnet sind, von denen die erste Drehdurchführung (60a) zwischen der Schlauchtrommel (14) und einer Verbindungsleitung (54) und die zweite Drehdurchführung (60b) zwischen der Verbindungsleitung (54) und der Ausbringleitung (18) angeordnet ist, und wobei beide Drehdurchführungen (60a, 60b) jeweils eine Dichtung zur Vermeidung von Wasserverlusten im Bereich der Drehdurchführungen (60a, 60b) aufweisen.

22. Selbstfahrende Vorrichtung (2) nach einem der vorhergehenden Ansprüche, **dadurch gekennzeichnet, dass** die Vorrichtung (2) eine elektronische Steuerung (62) aufweist, mit der die selbstfahrende Vorrichtung (2) insbesondere autonom ohne eine auf oder in der Vorrichtung (2) sitzende Bedienperson betreibbar ist.

23. Selbstfahrende Vorrichtung (2) nach einem der vorhergehenden Ansprüche, **dadurch gekennzeichnet, dass** als motorischer Antrieb (26, 28, 30, 32) für das Traggestänge (22), für die Schlauchtrommel (14) für den Fahrantrieb der selbstfahrenden Vorrichtung (2) und/oder die Hubvorrichtung (34) ein Elektromotor verwendet ist.
